# EUROPÄISCHE PATENTSCHRIFT

(11) **EP 3 184 987 B1**
(45) Veröffentlichungstag und Bekanntmachung des Hinweises auf die Patenterteilung: **04.03.2020**
(21) Anmeldenummer: 16205721.0
(22) Anmeldetag: 21.12.2016
(51) Int. Cl.: G01N 3/00, G01N 3/303, G01N 3/04, G01N 3/30

(54) **LAGERSTÜCK FÜR EIN WIDERLAGER EINES PENDELSCHLAGWERKS**
BEARING SUPPORT FOR A THRUST BEARING OF A PENDULUM STRIKING MECHANISM
PALIER POUR BUTÉE DE MÉCANISME PAR CHOC PENDULE

(30) Priorität: 21.12.2015 DE 102015122414
(43) Veröffentlichungstag der Anmeldung: 28.06.2017
(73) Patentinhaber: ZwickRoell GmbH & Co. KG, 89079 Ulm (DE)
(72) Erfinder: Maiser, Helmut, 89155 Erbach-Ersingen (DE)
(74) Vertreter: Cremer, Christian

(56) Entgegenhaltungen:
- "DIN EN ISO 148-2:2015-09 Metallische Werkstoffe - Kerbschlagbiegeversuch nach Charpy - Teil 2: UEberpruefung der Pruefmaschinen (Pendelschlagwerke) / Metallic materials - Charpy pendulum impact test - Part 2: Verification of testing machines (ISO/DIS 148-2:2015); German and English version prEN ISO", DIN ISO STANDARD, DIN ISO, DE, Bd. DIN EN ISO 148-2:2015-09, 1. September 2015 (2015-09-01), Seiten 1-48, XP008183270,
- Wpm Werkstoffprüfsysteme ET AL: "Technische Spezifikation Pendelschlagwerk PSd 750", , 16. September 2014 (2014-09-16), XP055368857, Gefunden im Internet: URL:http://www.wpm-leipzig.de/fileadmin/co ntent_data/pdf/WPM_Pendelschlagwerk_PSd_75 0_DE.pdf [gefunden am 2017-05-03]
- WPM Leipzig Testing Machines: "Pendelschlagwerk / Pendulum Impact Tester", , 31 December 2008 (2008-12-31), XP055442301, Retrieved from the Internet: URL:https://www.yumpu.com/en/document/down load/16381851/b5e2d-03aad-1ba52-a9077-28f8 b-29373-4d34d-756ac [retrieved on 2018-01-18]

## Beschreibung

Die vorliegende Erfindung bezieht sich auf ein Pendelschlagwerk, genauer auf ein Lagerstück, insbesondere als Teil eines Schlagbocks, für ein Pendelschlagwerk, wobei das Pendelschlagwerk mit einem U-förmigen Pendelhammer ausgestattet sein kann. Das Lagerstück weist wenigstens eine Anlagerfläche für eine Probe auf, die für eine Schlagkraftaufnahme einer Schlagkraft geeignet ist. Ein Widerlager umfasst mindestens ein Lagerstück. Ein Widerlager ist für ein Gegenlegen einer Probe verwendbar, insbesondere einer Probe, die für einen Kerbschlagversuch nach Charpy, bestimmt ist. Mit anderen Worten, die vorliegende Erfindung betrifft ein Lagerstück nach dem Oberbegriff nach Anspruch 1.

### Technisches Gebiet

Für Materialversuche, insbesondere mit metallischen Proben, werden weithin gerne Pendelschlagwerke eingesetzt, bei denen mit einer Schlagfinne eine Schlagenergie auf die metallische Probe gegeben wird. Die Probe ist für die Einbringung der Schlagenergie gelagert. Das Materialverhalten der Probe wird in Folge des Schlagversuchs wie z. B. eines Kerbschlagversuchs nach Charpy untersucht. Als Pendelschlagwerke haben sich vorrangig zwei Typen durchgesetzt, Schlagwerke mit einem U-förmigen Hammer bzw. Pendelhammer und Schlagwerke mit einem C-förmigen Hammer bzw. Pendelhammer. Die Form des Hammers hat Einfluss auf die Gestaltung des Schlagbocks, auf dem bzw. an dem die metallische Probe während des Versuchs gelagert wird. Der Hammer soll, insbesondere in den Fällen, in denen keine Probe auf dem Schlagbock aufgelegt ist, durch die Position der Probe durchschwingen können. Hierfür muss der Schlagbock einen entsprechenden Schwingfreiraum bzw. Freiraum vorhalten, den so genannten Durchschwingraum. Während bei einem Schlagwerk mit C-förmigen Pendelhammer die seitliche Ausladung des Schlagbocks von geringer Bedeutung ist, muss der Schlagbock bei U-förmigen Pendelhammer aufgrund der Gestalt des Pendelhammers innerhalb einer gewissen Breite bleiben. Gängige Maße für die Breite des Schlagbocks auf Höhe des Durchschwingraums haben sich bei Breiten unterhalb von 120 mm, teilweise sogar bei weniger als 110 mm etabliert.

Zahlreiche Anforderungen an Pendelschlagwerke sind in einschlägigen Normen festgelegt, wie z. B. in der DIN ISO 148-2:2008, auf die zur Bestimmung des behandelten technischen Gebiets und seiner geometrischen Rahmenbedingungen für die Erörterung der vorliegenden Erfindung Bezug genommen wird.

Um die Erfindungsbeschreibung übersichtlich zu halten, gelten die Bestimmungen, Vorgaben, Definitionen und zum Teil auch die Wortwahl aus den einschlägigen Normen, sofern die vorliegende Erfindung und ihre Beschreibung nicht, insbesondere aufgrund der nachfolgenden Darstellungen, hiervon abweichen sollten.

### Stand der Technik

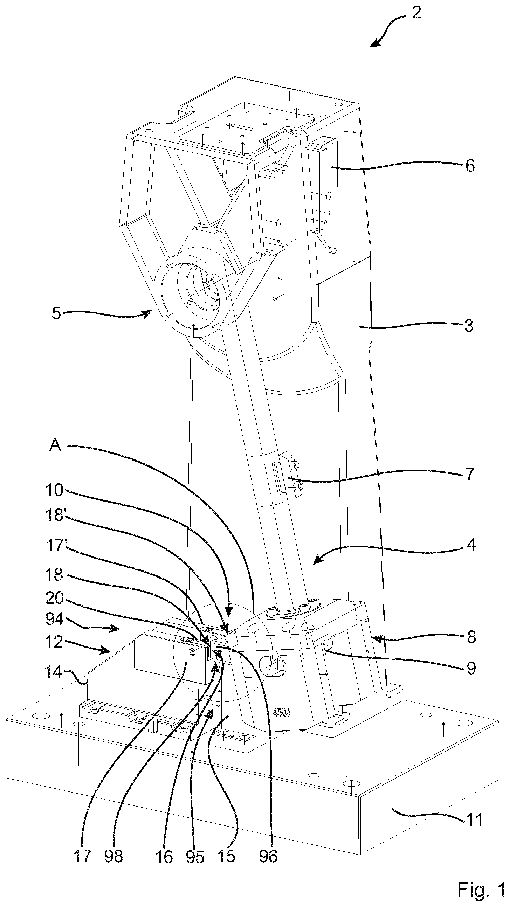

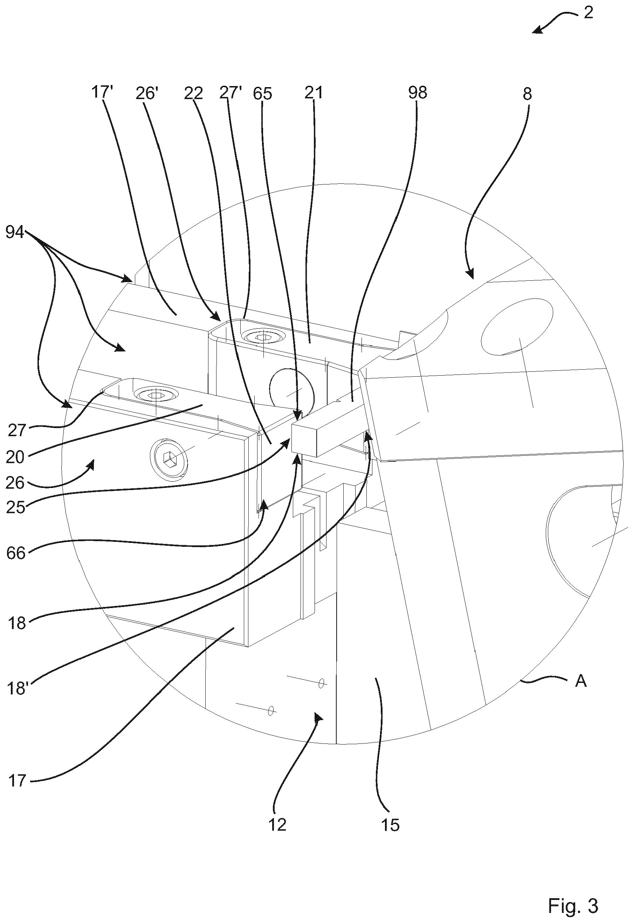

Die Schutzrechtsliteratur bietet zahlreiche Darstellungen von Widerlagern bei Pendelschlagwerken, die bei einer flüchtigen Betrachtungsweise eine größere Fläche als die tatsächlich genutzte Schlagfläche zeigen, jedoch in denen dann - nach einer näheren Analyse - ein Widerlager zu erkennen ist, das tatsächlich eine sehr kleine Lagerfläche für den Prüfkörper zur Verfügung stellt. Z. B. zeigt die DD 223 816 A1 (Patentinhaberin: Technische Hochschule "Carl Schorlemmer" Leuna-Merseburg; Anmeldetag: 30.05.1984) in Figur 1 einen Prüfkörper, der auf einem Prüfkörpertisch liegt, welcher wiederum auf einem Teil des Widerlagers ruht. Die Widerlagerstellfläche ist zwar deutlich größer als die Anlagefläche des Prüfkörpers, sie ist aber durch den Prüfkörpertisch zu großen Teilen verdeckt, wodurch die nutzbare Widerlagerfläche deutlich geringer ausfällt. Die DE 102 13 232 B4 (Patentinhaberin: Bayer MaterialScience AG; Anmeldetag: 25.03.2002) zeigt in Figur 1 ein Widerlager, das auf den ersten Blick sehr groß wirkt. Werden die weiteren Figuren hinzugezogen, die einen Piezokristall in dem Widerlager eingebaut darstellen, so ergibt sich im Ergebnis auf der Stirnseite eine äußerst kleine Anlagefläche als Widerlager. Ähnlich verhält es sich in der Figur 3 (siehe Probe "D") der japanischen Patentanmeldung JP 2000 097 828 A (Anmelderin: SHIMADZU CORP; Anmeldetag: 18.09.1998).

Eine weitere Gruppe von Schutzrechten zeigt ebenfalls Anlagerungsflächen als Teil des Widerlagers, die zwar größer sind als die für eine Berührung zwischen Widerlageroberfläche und Probenoberfläche fluchtend anzuordnende Stirnfläche der Probe. Bei genauerer Betrachtung der Übergänge zwischen Widerlager und Proben ist aber tatsächlich jeweils nur eine sehr kleine Kontaktfläche vorzufinden. Die deutsche Patentschrift DE 1 070 849 C (Patentinhaberin: Alfred J. Amsler & Co.; Prioritätstag: 23.09.1954) zeigt in Figur 6 ein dreieckiges Ende mit einer Rundung im absoluten Endbereich des Wiederlagers, diese Gestaltung ist für eine Linienberührung zwischen Widerlager und Probe entworfen. Figur 3 der WO 00/19 181 A1 (Anmelderin: FORSCHUNGSZENTRUM KARLSRUHE GMBH; Prioritätstag: 25.09.1998) zeigt eine im Vergleich zur Probenoberfläche schräg verlaufende Stirnseite des Widerlagers. Figur 5 der britischen Patentschrift GB 376 726 A (Patentinhaber: AGUSTIN PLANA; Prioritätstag: 21.01.1930) zeigt in ihrem unteren, rechten Eck eine Kombination aus zwei Widerlagern und einer dazwischen angeordneten Kerbprobe, bei denen die Widerlager symmetrisch konstruiert zu sein scheinen, aber halbrunde Ausnehmungen knapp vor ihren Endbereichen aufweisen, die zudem zu großen Teilen durch seitliche Spannbacken verdeckt sind.

Solche punktuellen und kleinflächigen, linearen Berührungen oder abgewinkelten Widerlagerflächen dürften nicht den Vorgabe in den einschlägigen Normen wie der DIN ISO 148-2 entsprechen. Die Norm DIN ISO 148-2 fordert eine planparallele Anordnung des Widerlagers zur Probe. Eine weitere zu beachtende Norm ist die DIN EN ISO 179-1 (für Kunststoffproben).

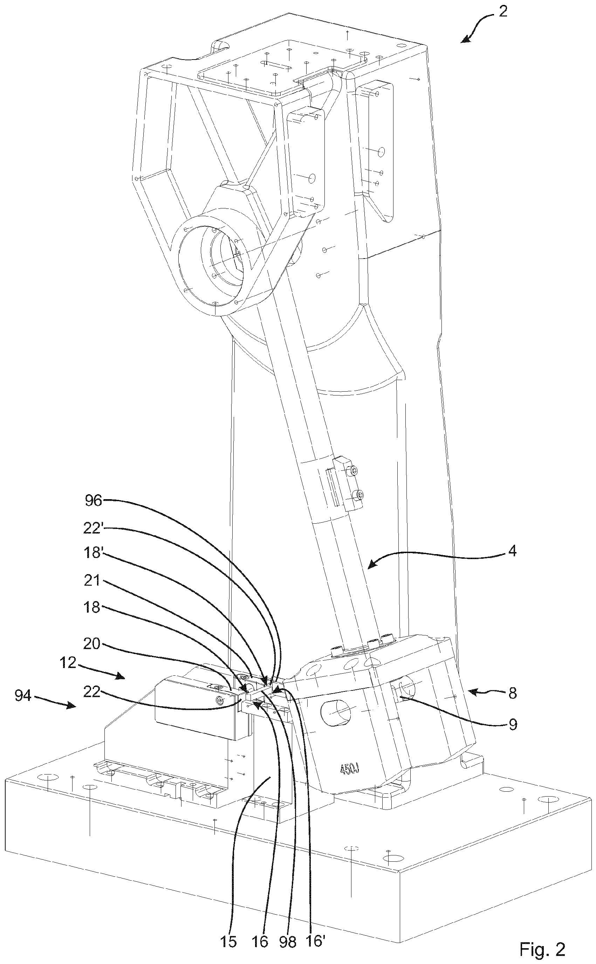

Es gibt jedoch auch Schutzrechte, bei denen sich eine größere Front- bzw. Anlagerungsflächen des Widerlagers bzw. der Widerlager im Vergleich zur Berührfläche der einzulegenden Probe finden lassen. Die DE 690 923 C (Patentinhaber: Dr.-Ing. Georg Wazau; Anmeldetag: 23.03.1939) zeigt einen Hammer mit zwei unterschiedlichen Schlagfinnen. Werden die dazugehörigen Proben in das Verhältnis der Stirnfläche des Widerlagers gesetzt, kann für den Metallstab 10 eine Kombination gefunden werden, bei der das Widerlager - gem. einer grafischen Auswertung der Figur 1 - ungefähr 2,5-fach so hoch ist wie die Anlagerungsfläche der stabförmigen Probe. Figur 7 der DE 196 14 966 C1 (Patentinhaberin: Forschungszentrum Karlsruhe GmbH; Anmeldetag: 17.04.1996) zeigt recht schematisch eine Probe, die auf einer Auflage aufgereiht an zwei Widerlagern 10 platziert angeordnet ist. Werden die Oberflächen der Berührflächen der Probe und der Stirnseite der Widerlager zueinander in Beziehung gesetzt, so scheint die Fläche des jeweiligen Widerlagers wenigstens dreimal bis viermal so groß zu sein wie die Berührfläche der Probe. Ein noch extremeres Verhältnis scheint sich aus den Figuren 1, 2 und 3 der australischen Patentanmeldung AU 2011 100 799 A4 (Anmelderin: Sufa Hengdian Machine Co., Ltd.; Anmeldetag: 01.07.2011) zu ergeben. Deutlich besser aufeinander abgestimmt ist die Widerlagerstirnseitenfläche und die Anlagefläche der Probe nach Figur 1 der US 2 388 246 A (Patentinhaber: Arthur J. Berger; Anmeldetag: 11.05.1945), die Verhältnisse scheinen ungefähr 2,5:1 zu sein. Zudem gibt es Stirnflächendarstellungen von gestuften Schlagböcken, wie dem Schlagbock 6 der Figur 1 der SU 1 080 066 A1 (Patentinhaberin: SP K B RAZRABOTKE AVTOMATICHES; Anmeldetag: 30.08.1982). Die Probe 7 ist in der mittleren Stufe des Schlagbocks anzuordnen. Die übrigen Stirnseiten der Stufen des Schlagbocks sind zwar weitere Flächen, die aber nicht als Anlagefläche hinzugerechnet werden können. Figur 2 der SU 926 568 A (Patentinhaberin: KB POLT INST KUJBYSHEVA; Anmeldetag: 25.06.1980) arbeitet mit einer statischen Finne, gegen die mittels eines U-förmigen Hammers die eingespannte Probe geschlagen wird. Somit stellt die Finne, die deutlich sowohl unterhalb als auch oberhalb der Probe hinaussteht, die Stirnseite eines Widerlagers da. Die Grafik der Figur 2 der SU 926 568 A scheint ebenfalls größere Verhältnisse als 6:1 zwischen den zueinander zugewandten Seiten der Finne und der Probe (im Fall einer Berührung) zu zeigen. Wird das Anwendungsgebiet der Versuche mit metallischen Proben verlassen, so gibt es Druckschriften wie das US-Patent US 5 922 937 A (Patentinhaberin: Lear Corporation; Anmeldetag: 29.08.1997), das einen Prüfkörper in Gestalt eines menschenähnlichen Kopfes als ein Pendel gegen eine deutlich größere Prallplatte 52 schlagen möchte.

Wie sich bei einer Gruppierung der Schutzrechtsliteratur nach Hammertypen ergibt, dürften nur deutlich weniger Druckschriften Schlagwerke mit Widerlagern und an diesen vorbeischwingbaren U-förmige Hammer zeigen, z. B.:
1. GB 549 140 A (Patentinhaber: EDWARD ERNEST SIMMONS, Jr.; Prioritätstag: 23.02.1940),
2. US 4 425 786 A (Patentinhaberin: Valtion Teknillinen Tutkimuslaitos; Prioritätstag: 10.10.1979),
3. DE 103 03 884 B4 (Patentinhaberin: Underwriters Laboratories Inc.; Prioritätstag: 04.07.2002) und
4. US 2015/052 972 A1 (Patentinhaberin: TINIUS OLSEN TESTING MACHINE COMPANY; Prioritätstag: 23.08.2013).

Aufgrund der einfacheren mechanischen Umsetzung, insbesondere wegen des im Bereich des Schlagbocks zur Verfügung stehenden Platzes bei Pendelhammern wie einem C-förmigen Hammer, scheinen viele Entwickler, ihren Schwerpunkt bei der Konstruktion eines Pendelschlagwerks mit einem C-förmigen Pendelhammer zu legen, obwohl die DIN EN ISO 148-2, insbesondere die Ausgabe September 2009, beide Pendelschlagwerke, die mit U-förmigen Pendelhammer und die mit C-förmigen Pendelhammer, als gleichberechtigt darstellt. In einschlägigen Fachkreisen wird sogar von einigen Fachleuten die Auffassung vertreten, dass ein Schlagwerk mit einem U-förmigen Pendelhammer das vorteilhaftere Schlagwerk ist, weil jenseits der Schlagfinne, betrachtet von dem Drehpunkt des Pendels aus, keine oder nahezu keine Masse für den Pendelhammer anzuordnen ist. Alternativ kann auch die DIN EN ISO 148-2 in der Ausgabe von September 2015 genannt werden, die sich bei den Anforderungen an Referenzproben von der Ausgabe September 2009 unterscheidet. Weitere Anforderungen, wie Kerbschlagbiegeversuche nach Charpy auszuführen sind, ergeben sich aus der DIN EN ISO 148-1, z. B. in der Fassung von September 2015.

Die zitierten Druckschriften gelten mit ihrer Benennung als vollumfänglich in vorliegende Erfindungsbeschreibung inkorporiert, insbesondere in Bezug auf die Darstellung von Zusammenhängen zwischen den einzelnen Komponenten eines Pendelschlagwerks und ihren Funktionen. Hierauf baut die vorliegende Erfindung auf und inkorporiert die Darstellungen in den genannten Druckschriften.

In der Werbebroschüre "Pendelschlagwerk PSd 750" der Herstellerin "WPM Werkstoffprüfsysteme Leipzig GmbH" ist an einer Stelle ein Hinweis enthalten, dass Widerlager für Proben, die einem Versuch nach Charpy unterzogen werden sollen, so gestaltet werden können, dass durch ein Drehen der Einsätze des Widerlagers diese Einsätze mehrmals verwendet werden können. Offensichtlich schlägt die "WPM Werkstoffprüfsysteme Leipzig GmbH" vor, einen kompletten Widerlagereinsatz von all seinen Seiten nach und nach durch Kerbschlagbiegeversuche so lange zu stauchen, bis keine nutzbare Seite mehr vorhanden ist.

Eine weitere Werbebroschüre mit der Bezeichnung "Pendelschlagwerk/Pendulum Impact Tester PSd 150/300/450" der Herstellerin "WPM Werkstoffprüfsysteme Leipzig GmbH" stellt eine Pendelschlagwerksserie mit U-förmigem Hammer vor, wobei in die Pendelschlagwerke Widerlager einbaubar sind, die würfelartig sind und zumindest einige Ähnlichkeiten zu den Widerlagern des Pendelschlagwerks "Pendelschlagwerk PSd 750" der gleichen Herstellerin haben.

Die Lager, insbesondere das Widerlager, eines Pendelschlagwerks sind aus dem Blickwinkel der Materialauswahl besonders wertvolle Bauteile eines Pendelschlagwerks, weil die Lager in der Regel besonders gehärtete oder legierte Bauteile sind. Zugleich sind die Lagerstücke aber Verbrauchsmaterialien, die immer wieder auszutauschen sind. Nach jedem Tausch der Lagerstücke bzw. der Lager sind das Pendelschlagwerk neu zu justieren oder zu kalibrieren, bevor ein weiterer, regulärer Versuch gestartet werden darf.

Es besteht also ein Wunsch bei den Nutzern und Verwendern von Pendelschlagwerken, insbesondere von Nutzern und Verwendern von Pendelschlagwerken für Kerbschlagversuche nach Charpy mit U-förmigen Pendelhammern, möglichst lange Standzeiten der Lager vorzufinden. Sind die Lager aber zu tauschen, was nicht nach einer gewissen Anzahl an Versuchen bzw. einer gewissen eingebrachten Versuchsenergie unumgänglich ist, sollte ein Tausch möglichst zügig abwickelbar sein, damit die als unproduktiv angesehene Zeit für das Tauschen und das Justieren bzw. Kalibrieren möglichst kurz gehalten werden kann.

### Aufgabenstellung

Es besteht ein Bedarf nach einem Lagerstück, das für das Gegenlegen von Proben in möglichst vielen Pendelschlagversuchen geeignet ist. Nach einem anderen Aspekt soll ein Verbrauch von Lagerstückmaterial, der durch das Ersetzen von verschlissenen Lagerstücken entsteht, auch bei sehr intensiver Beanspruchung von Lagerstücken so gering wie möglich ausfallen. Günstig ist es, wenn ein entsprechendes Lagerstück in einer Widerlagerkonstruktion bzw. einem Schlagbock in einem Pendelschlagwerk einsetzbar ist. Es ist wünschenswert, wenn die gesamte Baugruppe bzw. der Bereich, die bzw. der im Pendelschlagwerk für die Lagerung von Werkstoff- und/oder Bauteilproben zuständig ist, eine möglichst hohe Standzeit aufweist.

### Erfindungsbeschreibung

Die erfindungsgemäße Aufgabe wird durch ein Lagerstück nach Anspruch 1 gelöst. Vorteilhafte Weiterbildungen lassen sich den abhängigen Ansprüchen entnehmen.

Wird das Lagerstück unabhängig von einem Pendelschlagwerk bzw. einem Schlagbock betrachtet, so lassen sich dennoch zwei Bereiche vorfinden, die als Anlagerflächen bezeichnet werden können. Zumindest hat das Lagerstück eine erste Anlagerfläche und eine zweite Anlagerfläche. Auch lassen sich an einem Lagerstück Lagerstückflächen finden. Zumindest hat ein solches Lagerstück eine erste Lagerstückfläche und eine zweite Lagerstückfläche. Das Lagerstück soll, insbesondere mit seinen Anlagerflächen, Teil eines Widerlagers in einem Pendelschlagwerk sein. Das Lagerstück ist für die Verwendung in Pendelschlagwerken bestimmt. Das Lagerstück ist dafür ausgelegt, in einem Pendelschlagwerk verwendet zu werden. Hierfür wird z. B. ein Lagerstück mit einer ausreichenden Härte, z. B. einer Härte von wenigstens 45 HRC (Härteprüfung durch Eindringung eines Prüfkörpers Typ C nach Rockwell), hergestellt. Lagerstücke mit z. B. 65 HRC können eine sehr gute Lebensdauer aufweisen. Die Härte gilt als ausreichend, wenn sie zumindest den Mindestüblichkeiten von Pendelschlagwerken entspricht. Im Bereich von Stirnflächen des Lagerstücks kann eine Probe gegengelegt werden. Die Stirnfläche ist - zumindest in Abschnitten - als Anlagerfläche, als Anlagefläche oder als Anlegefläche bzw. als Gegenlegefläche einer Probe, z. B. einer metallischen Probe, vorgesehen. Die Anordnung der Probe vor bzw. an der Anlagerfläche wird vorgenommen, wenn z. B. ein Kerbschlagversuch nach Charpy in einem Pendelschlagwerk mit einem, insbesondere im bodennahen Bereich angeordneten, Schlagbock durchgeführt werden soll.

Das Lagerstück kann Teil eines Widerlagers sein. Mehrere Lagerstücke, insbesondere zwei Lagerstücke, sind Teil des Widerlagers. So ist es möglich, ein aus identischen Zwillingen geschaffenes Widerlagerpaar zu einem Widerlager zusammenzusetzen. Gleichteile formen das Widerlager aus den Widerlagerkomponenten erstes Lagerstück und zweites Lagerstück.

Das Lagerstück hat plane Flächen. Eine Fläche wird als plane Fläche angesehen, wenn sie zumindest im Gradbereich den vorgegebenen Winkelverlauf zu seiner Bezugsfläche einhält. Die Anlagerfläche sollte also eine Orientierung aufweisen, die es ermöglicht, als Widerlagerfläche zu einem Auflager mit einem Winkel von 90° zu verlaufen. Zumindest die Vorkommaangabe der Flächenorientierung sollte auf ein Grad genau einhaltbar sein. Günstiger sind aber Flächen, die noch genauer sind. So gilt, nach einer anderen Definition, eine Fläche als plane Anlagerfläche, wenn sie einem Versatz von weniger als 0,1 mm über ihre gesamte Fläche aufweist. Wünschenswert sind Genauigkeiten im 1/100-Bereich oder sogar 1/1000-mm-Bereich. Die Anlagerfläche ist für eine Schlagkraftaufnahme vorgesehen. Die Schlagkraft ergibt sich aus den Abmessungen und der Versuchsdurchführung in einem Pendelschlagwerk. Möglichst plane Flächen helfen bei der Messgenauigkeit. Die Angabe "plan" ist daher im Zusammenhang mit dem bestimmungsgemäßen Pendelschlagwerk zu sehen. Das Widerlager soll ein Widerlager für eine Probe sein.

Bei bestimmungsgemäßer Verwendung des Lagerstücks hat das Lagerstück eine erste Anlagerfläche, die insbesondere eine plane Anlagerfläche ist. Die Anlagerfläche ist als Fläche zum Gegenliegen einer Probe entworfen. Eine Schlagkraft, die auf die Probe eingebracht wird, wird über die Anlagerfläche in das Lagerstück eingeleitet. Die Anlagerfläche ist daher für eine Schlagkraftaufnahme einer Schlagkraft auf eine erste Probe entworfen.

Das Lagerstück hat eine zweite Anlagerfläche. Die zweite Anlagerfläche liegt an einer anderen Stelle bzw. in einem anderen Bereich der Stirnfläche des Lagerstücks. Die erste Anlagerfläche und die zweite Anlagerfläche weisen zumindest in Bezug auf eine Kante oder einen Rand der Anlagerfläche einen Abstand auf. Es ist eine gleichartige Kante, z. B. in einer Ausgestaltung eine unten liegende Kante, an der ersten Anlagerfläche und an der zweiten Anlagerfläche vorhanden, zwischen denen ein Abstand gegeben ist.

Für eine mehrfache Verwendbarkeit eines Lagerstücks zuträglich ist es, wenn ein Lagerstück mindestens zwei Einbaurichtungen hat. Noch zuträglicher ist es, wenn vier Einbaurichtungen für das Lagerstück vorhanden sind. Zwischen den Einbaurichtungen kann z. B. durch eine Achsdrehung gewechselt werden. Eine Drehung um eine Lagerstücklängsachse herum kann eine solche Drehachse sein, um die die Achsdrehung stattzufinden hat, damit eine andere Einbaurichtung eingenommen wird. Die Einbaurichtung ändert sich durch Drehung. Es kann zwischen verschiedenen Einbaurichtungen gewechselt werden.

Die erste Anlagerfläche ist für die Aufnahme der Schlagkraft bei einem Schlagkraftversuch wie einem Kerbschlagbiegeversuch ausgelegt. Der erste Kerbschlagbiegeversuch wird mit einer ersten Probe durchgeführt. Soll eine zweite Probe getestet werden, insbesondere in dem Fall, in dem die erste Anlagerfläche Markierungen des ersten Versuchs aufweist oder zeitigt, so bietet die Stirnfläche des Lagerstücks eine zweite Anlagerfläche. Die erste und die zweite Anlagerfläche sind nicht identisch, sondern sie decken unterschiedliche Bereiche auf der Stirnfläche des Lagerstücks ab. Idealerweise sind die beiden Anlagerflächen jeweils plan. Die beiden Anlagerflächen sollten zu der gleichen Güteklasse, insbesondere in Bezug auf ihre Ebenheit, gehören. Die zweite Anlagerfläche ist für die Aufnahme einer Schlagkraft einer Untersuchung einer zweiten Probe ausgelegt.

Das Lagerstück ist ein kompaktes Bauteil. Das Lagerstück hat mehrere Flächen, es ist mehrflächig. Das Lagerstück hat ebene bzw. plane Flächen, die zueinander in einem bestimmten Winkel stehen. Eine besondere Fläche ist die Stirnfläche. Teil der Stirnfläche ist eine Anlagerfläche. Zu der Stirnfläche gibt es wenigstens eine rückwärtige oder abgewandte Fläche, die auch als Rückseite bezeichnet werden kann. Stirnfläche und Rückseite sind über weitere Flächen verbunden. Hinter der Stirnfläche sind vorteilhafter Weise, insbesondere zur Förderung des "Durchziehens" der angeschlagenen Probe, Hinterschnitte bzw. Hinterzüge vorhanden. Sind Hinterschnitte vorhanden, können zusätzlich noch Flächen an dem Lagerstück vorhanden sein, die als weitere Lagerstückflächen bezeichnet werden können. Die Flächen der Hinterzüge und die Flächen der sonstigen Erstreckung, insbesondere jenseits der Stirnfläche, können als Lagerstückflächen bezeichnet werden.

Wie zuvor schon angesprochen, gibt es Lagerstückflächen und zumindest eine Stirnfläche an dem Lagerstück. Insbesondere gibt es Anlagerflächen. Zwei der Anlagerflächen können als erste Anlagerfläche und als zweite Anlagerfläche bezeichnet werden. Zwei der Lagerstückflächen können als erste Lagerstückfläche und als zweite Lagerstückfläche bezeichnet werden. Zumindest eine Fläche des Lagerstücks kann als Boden bezeichnet werden. Sofern ein Hinterschnitt vorliegt, sind bis zu vier Seiten als Hinterschnittflächen bzw. als Lagerstückflächen des ersten Typs vorhanden. An die Hinterschnittflächen bzw. die Lagerstückflächen des ersten Typs schließen sich Lagerstückflächen des zweiten Typs an. Die Hinterschnittflächen bzw. die Lagerstückflächen des ersten Typs können auch durchgezählt werden. Demnach gibt es eine erste Lagerstückfläche und eine zweite Lagerstückfläche. Sind vier Hinterschnittflächen vorhanden, so gibt es eine dritte Lagerstückfläche und eine vierte Lagerstückfläche. Folglich gibt es eine erste Lagerstückfläche und eine erste Anlagerfläche. Genauso gibt es eine zweite Lagerstückfläche und eine zweite Anlagerfläche. Je nach Gestaltung kann es noch weitere Lagerstückflächen geben, z. B. eine dritte Lagerstückfläche, eine vierte Lagerstückfläche usw. Je nach Gestaltung der Stirnfläche können auch weitere Anlagerflächen vorhanden sein, also eine dritte Anlagerfläche, eine vierte Anlagerfläche usw.

Von einem entfernteren Blickwinkel auf das Lagerstück sind zahlreiche Flächen an dem Lagerstück zu sehen. Die Oberfläche des Lagerstücks kann betrachtet werden. Die Oberfläche kann bei einer Betrachtung in umfänglicher Richtung betrachtet werden. Wird das Lagerstück gedreht, um jeweils eine Fläche des Lagerstücks oben liegen zu haben, können alle Flächen, eine Fläche nach der nächsten, betrachtet werden. Eine solche Betrachtung kann auch als umfängliche Betrachtung, also einer Betrachtung der Oberfläche bzw. der umfänglichen Grenze des Lagerstücks bezeichnet werden.

Zwischen der Stirnfläche bzw. einer auf der Stirnfläche vorhandenen Anlagerfläche und sich an sie anschließenden Lagerstückfläche kann ein Innenwinkel herausgemessen bzw. nachgebildet bzw. ermittelt oder bestimmt werden.

Die erste Anlagerfläche der ersten Lagerstückfläche folgt, ggf. über dazwischenliegende Radien bzw. einem Radius, der ersten Lagerstückfläche. Beide Flächen, die erste Lagerstückfläche und die erste Anlagerfläche können als erste Flächen bezeichnet werden. Zwischen den beiden ersten Flächen erstreckt sich ein Winkel, der zwischen den beiden ersten Flächen eingeschlossen ist. Dieser erste Winkel hat eine Größe, die 90° nicht übersteigt. Der Winkel ist nicht größer als 90°.

Nach einem anderen Aspekt kann auch gesagt werden, dass die erste Anlagerfläche mit der ersten Lagerstückfläche einen Winkel des Lagerstücks einschließt, der weniger als 90° beträgt. Ein Apex des Winkels ist vorzugsweise abgerundet. Gleichartig wie zwischen der ersten Anlagerfläche und der ersten Lagerstückfläche sind an der Stirnfläche gegenüberliegend die zweite Anlagerfläche und die zweite Lagerstückfläche unter einem Winkel angeordnet.

Zwischen der ersten Lagerstückfläche und der zweiten Lagerstückfläche gibt es einen Stirnbereich des Lagerstücks. Der Körper des Lagerstücks hat einen Stirnbereich. Der Stirnbereich liegt zwischen der ersten Anlagerfläche und der zweiten Anlagerfläche.

Mit anderen Worten, das Lagerstück weist in einer umfänglichen Betrachtung, also einer Betrachtung der Oberfläche des Lagerstücks von einem abgesetzten Punkt aus, eine Lagerstückfläche, ein Verbindungselement, eine Stirnfläche bzw. einen Stirnbereich mit Anlagerflächen, ein weiteres Verbindungselement und eine weitere Lagerstückfläche auf.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

In einer weiter vorteilhaften Ausgestaltung folgt die zweite Anlagerfläche der zweiten Lagerstückfläche. Zweite Anlagerfläche und zweite Lagerstückfläche folgen aufeinander. Dabei kann zwischen den Flächen ein Verbindungselement oder es können mehrere Verbindungselemente vorhanden sein. Die zweite Anlagerfläche und die zweite Lagerstückfläche schließen ein Verbindungselement ein. Die Ausrichtung der Flächen, genauer der zweiten Flächen, verläuft so, dass ein Innenwinkel zwischen den Flächen einzeichenbar bzw. ermittelbar ist. Unter einem von den beiden zweiten Flächen eingeschlossenen Winkel von nicht mehr als 90° erstrecken sich die beiden zweiten Flächen von dem Verbindungselement wie einem Radius hinweg.

Abgesehen von der Anordnung der Lagerstückflächen und des Stirnbereichs hat ein vorteilhaftes Lagerstück noch zahlreiche weitere, vorteilhafte Besonderheiten, von denen nachfolgend einige mit ihren eigenständigen Aspekten vorgestellt werden sollen.

Das Lagerstück hat mehrere, in einer Ausgestaltung zumindest zwei Anlagerflächen. Die erste Anlagerfläche und die zweite Anlagerfläche sind auf einer Stirnseite des Lagerstücks. Die beiden Anlagerflächen können planparallel zueinander angeordnet vorhanden sein. Die Anlagerflächen können nebeneinander liegen. Die Anlagerflächen können planparallel in einer Nachbarschaft vorhanden sein.

Vorteilhaft ist es, insbesondere für die Produktion und auch für die Nutzung des Lagerstücks, wenn das Lagerstück aus einer Zusammenstellung von geometrischen Grundformen besteht. Beispielhaft kann der Stirnbereich keilstumpfartig oder pyramidenstumpfartig ausgebildet sein. Die Stirnseite kann eine Keilbasis oder eine Pyramidenbasis bilden. Bei einem solchen geometrischen Vergleich werden z. B. die Verbindungselemente zwischen den größeren Flächen erst einmal ausgeblendet. Die größeren Flächen und die durch die Flächen eingeschlossenen Volumina des Lagerstücks dominieren die Form des Lagerstücks. Daher kann das Lagerstück dem Wesen nach als keilstumpfartig oder pyramidenstumpfartig bezeichnet werden, obwohl z. B. verbindende Rundungen oder Phasen vorhanden sind.

Das Lagerstück hat die erste Anlagerfläche, an die sich eine zylindersegmentartige Rundung anschließt. Die erste Anlagerfläche geht in eine erste zylindersegmentartige Lagerstückrundung über.

Auch ist es vorteilhaft, wenn die zweite Anlagerfläche in eine zweite zylindersegmentartige Lagerstückrundung übergeht. Die erste Lagerstückrundung und die zweite Lagerstückrundung haben eine Fläche zwischen sich. Die Lagerstückrundungen sind entfernt voneinander bzw. beabstandet zueinander. Die Lagerstückrundungen befinden sich von einander beabstandet an unterschiedlichen Seiten des Lagerstücks. Die Lagerstückrundungen erstrecken sich in ihren eigenen Richtungen.

An einem vorteilhaften Lagerstück kann mindestens eine dritte zylindersegmentartige Lagerstückrundung vorhanden sein. Die dritte Lagerstückrundung, die dem Wesen nach eine zylindersegmentartige Form hat, ist vorzugsweise entweder parallel zu einer oder unter einem Winkel von 90° an eine weitere zylindersegmentartige Lagerstückrundung angeschlossen.

Vorteilhafte Stirnbereiche und Stirnseiten eines Lagerstücks setzen sich aus einzelnen Abschnitten zusammen. In einer Ausgestaltung ist insbesondere mindestens eine der Anlagerflächen von wenigstens einer Lagerstückrundung und einer Anlagerfläche begrenzt. Es kann eine Anlagerfläche ausgewählt werden, zu der es benachbart eine Lagerstückrundung und eine weitere, zweite Anlagerfläche gibt. In einer, ggf. alternativen oder auch weiterführenden Ausgestaltung hat der Stirnbereich zwei Lagerstückrundungen. Die beiden Lagerstückrundungen umfassen entweder die erste Anlagerfläche oder die zweite Anlagerfläche.

Das Lagerstück hat eine Fläche im Stirnbereich des Lagerstücks, die durch Radien und Phasen oder die durch Radien oder die durch Phasen begrenzt bzw. eingefasst ist. In einer Ausgestaltung schließen sich an eine Fläche im Stirnbereich wenigstens zwei Radien an. Auch ist es möglich, eine Fläche im Stirnbereich mit vier Radien zu umschließen bzw. von zumindest vier Radien seitlich begrenzt bereitzustellen. An einigen Rändern können sich Phasen an die Fläche anschließen. So können z. B. zwei Phasen seitlich die Fläche begrenzen.

An dem Lagerstück sind mehrere Anlagerfläche identifizierbar. Die erste Anlagerfläche wird von einer ersten Kreiszylindermantelsegmentfläche begrenzt. Die zweite Anlagerfläche wird von einer zweiten Kreiszylindermantelsegmentfläche begrenzt. Zumindest zwei Kreiszylindermantelsegmentflächen sind die begrenzenden Geometrien zu jeweils einer Anlagerfläche.

Der Abstand zwischen den beiden Kreiszylindermantelsegmentflächen ist deutlich zu erkennen. Der Abstand zwischen der ersten Kreiszylindermantelsegmentfläche und der zweiten Kreiszylindermantelsegmentfläche beträgt mindestens 1 mm. In den meisten Fällen ist der Abstand zwischen den Kreiszylindermantelsegmentflächen größer. Der Abstand zwischen den Kreiszylindermantelsegmentflächen beträgt bei vielen geeigneten Stirnflächen mindestens 10 mm. Die Kreiszylindermantelsegmentflächen liegen voneinander versetzt vor. Die Kreiszylindermantelsegmentflächen sind zueinander verlagert bzw. versetzt.

Die Stirnseite eines Lagerstücks sollte wenigstens zwei Segmente aufweist, die jeweils eine Flächengröße einer Anlagerfläche haben. Die Stirnseite ist segmentierbar. Anders gesagt, lässt sich die Stirnseite als eine Anordnung von miteinander verbundenen Stirnseitensegmenten beschreiben. Die einzelnen Segmente entsprechen den einzelnen Anlagerflächen. In einer Ausgestaltung bilden wenigstens vier Segmente die Stirnfläche.

Es können in dem Lagerstück parallel zu seiner Stirnseite Schnittflächen anhand der Abmessungen der Oberflächen bestimmt werden. Die Fläche, die auf der Oberfläche der Stirnseite liegt, ist in einer vorteilhaften Ausgestaltung eine breiteste Fläche des Widerlagers. Die betreiteste Fläche ist hinterschnitten. Durch einen Hinterschnitt, wobei der Hinterschnittwinkel mehr als 10° beträgt, d. h., der Innenwinkel zwischen Stirnseite und Hinterschnittseite beträgt weniger als 80°, ergibt sich eine Flächengröße der Fläche auf der Stirnseite als größte Fläche im vorderen Bereich des Lagerstücks. Wird eine weitere Schnittebene durch das Lagerstück gezogen, insbesondere eine parallel zu jener Stirnfläche vorliegende Schnittebene, so geht aufgrund des schrägen Verlaufs des Hinterschnitts eine Lagerstückkörperquerschnittsfläche hervor, die kleiner ist als die Stirnseite. Die Lagerstückkörperquerschnittsfläche, die sich im Bereich der Ausleitung aus dem Hinterschnitt befindet, hat weniger als 80 % der Flächengröße der Fläche auf der Stirnseite. Es gibt eine Lagerstückkörperquerschnittsfläche, die nur noch 80 % oder weniger der Fläche der Stirnseite hat.

Die Anlagerfläche ist eine Schlagfläche bzw. als Schlagfläche vorgesehen. Die Schlagfläche geht tangential in einen Radius über. Die Schlagfläche geht über in einen Radius. Der Radius schließt sich seitlich an die Schlagfläche an. Der Radius kann so geführt sein, dass er tangential in den Hinterschnitt ausmündet.

Das Lagerstück ist ein, vorzugsweise metallischer, Körper, der ein Volumen hat. Der Körper des Lagerstücks weist einen Einsetzbereich auf. Der Einsetzbereich ist für ein Einsetzen des Körpers in einen Schlagbock gestaltet. Der Einsetzbereich ist für ein hineingreifendes Einsetzen in eine Wand eines Schlagbocks ausgeformt.

Das Lagerstück sollte fixierbar sein. Das Lagerstück soll Teil eines Schlagbocks werden. Das Lagerstück hat dafür einen Befestigungsbereich. Der Befestigungsbereich kann sich durch mindestens eine Bohrung auszeichnen.

Die Bohrung ist eine durchgehende Bohrung, sofern der Befestigungsbereich durch solche Befestigungselemente wie Schrauben realisiert werden soll. Die Bohrung erstreckt sich dann durch den Körper des Lagerstücks. Die Bohrung kann so geführt sein, dass die Bohrung sich parallel zu mindestens einer der Anlagerflächen erstreckt. Die Achse der Bohrung und eine Flächennormale auf eine Anlagerfläche sind in einem rechten Winkel zueinander.

Ist bei einer Bohrung ein Aufnahmeraum für einen Kopf einer versenkbaren Schraube vorgehalten, kann die Schraube vollständig in dem Lagerstück und in dem Schlagbock verschwinden. Die Schraube braucht nicht mehr überstehen. Die Schraube wird entweder von dem Lagerstück oder von dem Schlagbock seitlich umrundend eingeschlossen. Auch kann die Ausgestaltung so gewählt sein, dass eine Ausnahme bzw. eine Vertiefung oder ein Loch für eine versenkte Aufnahme einer versenkbaren Mutter vorhanden ist.

Der Nutzung des Lagerstücks in unterschiedlichen Einbaurichtungen zuträglich ist es, wenn der Befestigungsbereich abhängig von Einbaulage unterschiedliche Einbaurichtungen oder Einbaulagen der Befestigungselemente anbietet. Bei einer wechselweisen Einbaulage des Lagerstücks können so zwei Einbauorientierungen vorgehalten werden. Mindestens in zweierlei Richtungen erlaubt eine wechselnde Einbaugestaltung eine Ortsfixierung des Lagerstücks an wenigstens einem Wandabschnitt eines, das Lagerstück aufzunehmenden Schlagbocks. Der Schlagbock soll das Lagerstück aufnehmen. In einer ersten Einbaulage kann der Schlagbock das Lagerstück in einer ersten Drehposition aufnehmen. In einer zweiten Einbaulage kann der Schlagbock das Lagerstück in einer zweiten Drehposition, die z. B. sich von der ersten Drehposition durch eine 180°-Drehung unterscheidet, festhalten.

Das Lagerstück hat eine zum Stirnbereich entferntest angeordnete Endfläche des Lagerstücks. Die entfernteste Endfläche kann auch als Rückseite oder Ende bezeichnet werden. Das Ende kann tonnenförmig gestaltet sein. Das Ende kann einen Abschluss des Lagerstücks bildet, der insbesondere wie eine Tonne (in einer geschnittenen Variante) aussieht.

Das Lagerstück weist wenigstens vier Flächen auf, von diesen vier Flächen haben jeweils zwei Flächen eine planparallele Position zueinander. Die Flächen erstrecken sich zwischen dem Stirnbereich und einem Ende des Lagerstücks. Von den vier Flächen dienen wenigstens zwei Flächen in einer Einbaulage in einem Schlagbock als Lagerflächen gegenüber dem Schlagbock. Zwei Flächen sind Lagerungsflächen zwischen Lagerstück und dem restlichen Schlagbock. Eine Fläche stellt eine Wandbegrenzung dar. Die Wandbegrenzung ist zu dem Durchschwingraum des Schlagbocks vorhanden.

Auch der Schlagbock bzw. ein mit einem Schlagbock ausgestattetes Pendelschlagwerk mit einem U-förmigen Pendelhammer selbst zeichnen sich durch zahlreiche, eigenständig als etwas Besonderes anzusehende Merkmale aus.

Es kann auch gesagt werden, dass die vorliegende Erfindung ganz besonders ihre Vorteile bei einem Schlagbock entfaltet, der für ein Pendelschlagwerk mit einem U-förmigen Pendelhammer vorgesehen ist bzw. in einem solchen Pendelschlagwerk verbaut ist. Ein Pendelhammer, der U-förmig gestaltet ist, weist - in der Regel - im Moment des Auftreffens des Pendelhammers auf die Probe, sofern diese auf dem Auflager aufliegt und an dem Widerlager anliegt, die Form eines auf den Kopf gestellten Buchstaben "U" auf. Die Schenkel des Pendelhammers begrenzen seitlich die Schlagfinne bzw. die Hammerfinne. Die Schenkel des Pendelhammers sind wie Seitenwände, die einen Schwingraum des Pendels einfassen. Die beiden Seitenwände, mit andere Worten, die Schenkel des U-förmigen Pendelhammers und die Schlagfinne sind parallel bei einem üblichen U-förmigen Pendelhammer ausgerichtet. Im Übrigen lassen sich die Begriffe "Schlagfinne" und "Hammerfinne" unter vielen Umständen synonym verwenden. Häufig ist das Pendelschlagwerk mit einem Platz für die Probe an der tiefsten Stelle des Schwingungswegs ausgestattet. Das Widerlager und das Auflager befinden sich in Nachbarschaft zu der Stelle, bei der die Hammerfinne die höchste kinetische Energie im Fall einer Versuchsdurchführung hat.

In Vorbereitung auf den durchzuführenden Versuch hat das Pendelschlagwerk bzw. sein Schlagbock wenigstens ein Widerlager und wenigstens ein Auflager. Der Schlagbock weist für die Anordnung einer Probe wenigstens ein Widerlager und wenigstens ein Auflager auf. Es versteht sich von selbst, dass Widerlager und Auflager auch als zusammenhängendes Bauteil ausgeführt sein können, jedoch - dem Prinzip nach - nicht als ein zusammenhängendes, einziges Bauteil realisiert sein müssen. Sinnvoll ist es, wenn auf dem Auflager die Probe aufliegen kann. Der Schlagbock mit seinem Widerlager und seinem Auflager kann auch derart geteilt ausgeführt sein, dass zwischen dem Auflagerteil und dem Widerlagerteil ein optionaler Raum existiert, in dem eine Zentriervorrichtung Platz findet. In einem solchen Fall sind das Auflager und das Widerlager beabstandet von einander, z. B. auf einer Fundamentplatte, angeordnet. Der Schlagbock erstreckt sich über mehrere Teile abschnittsweise. Ist eine Zentriervorrichtung vorhanden, so ist von einer Seite gesehen, zunächst der Teil des Widerlagers des Schlagbocks zu finden, anschließend die Zentriervorrichtung und im Anschluss daran der Teil des Auflagers des Schlagbocks. Sinnvoll ist es auch, wenn das Widerlager ein Lager ist, das entgegengesetzt zur Schlagrichtung eine Schlagenergie aufnehmen bzw. absorbieren kann. In dieser Konfiguration kann das Widerlager entfernter von einem Fundament des Pendelschlagwerks angeordnet sein als das Auflager. Das Auflager unterstützt gegenüber dem Erdboden die Probe.

In den einschlägigen Fachkreisen hat sich seit ca. 100 Jahren der Kerbschlagversuch bzw. der Kerbschlagbiegeversuch nach Charpy etabliert. Das von Augustin Georges Albert Charpy propagierte Versuchsverfahren operiert mit der Fallhöhendifferenz des Pendelhammers und erlaubt, die eingebrachte Energie in die Probe zu berechnen. Mithilfe des Kerbschlagversuchs nach Charpy lässt sich eine Probe qualitativ einsortieren.

Im unteren Bereich eines Pendelschlagwerks sollte ein Durchschwingraum vorgesehen sein. Durch den Durchschwingraum kann die Schlagfinne sich hindurchbewegen. Ein gedachter Raum, also ein virtuell abgegrenztes Volumen im unteren Bereich des Pendelschlagwerks oberhalb des Auflagers lässt die Bezeichnung Durchschwingraum zu.

Das Lager für die Probe kann in einzelne Komponente und Bauteile aufgeteilt werden. Technisch vorteilhaft ist zumindest die Aufteilung in Widerlager und Auflager, von denen jedes Bauteil als alleinstehendes Bauteil vorhanden sein kann, das heißt, ein Bauteil "Widerlager" und ein Bauteil "Auflager" sollte es geben, die natürlich auch einstückig bzw. zusammenhängend ausgestaltet sein können. Die beiden Bauteile oder Bauteilabschnitte (an einem größeren Bauteil) sollten aber designierbar sein.

Das Widerlager kann als seitliche Begrenzung des Durchschwingraums angesehen werden. Das Widerlager fasst den Durchschwingraum an einer Seite ein. Das Widerlager begrenzt den Durchschwingraum. Der Durchschwingraum liegt zwischen den Teilen des Widerlagers. In einer vorteilhaften Ausgestaltung erstreckt sich der Durchschwingraum von dem Widerlager in eine Richtung, die sich von Stirnflächen des Widerlagers weg ausbreitet.

Das Widerlager weist also Stirnflächen auf. Es gibt eine erste Stirnfläche und eine zweite Stirnfläche. Die Stirnflächen können als plane Flächen ausgestaltet sein. Die Stirnflächen sind z. B. zueinander plan. Die Stirnflächen können als jeweils für sich plane Stirnflächen bezeichnet werden. Eine besonders zuverlässige bzw. genaue Messung ist erzielbar, wenn die Toleranz der Stirnflächen niedrig ist. So kann eine Ebenheitstoleranz im Bereich der Toleranzklasse "H" nach ISO 2768-2 angesiedelt werden. Möglichst plane Flächen tragen dazu bei, dass die Schlagenergie gleichmäßig und gesamtflächig auf das Widerlager übertragen wird.

Vorteilhaft sind Proportionen der Flächen des Widerlagers, wonach eine Stirnfläche ein Mehrfaches einer Anlagerfläche aufweist. Eine Anlagerfläche ist dafür vorgesehen, eine Fläche einer Probe aufzunehmen. An einer Anlagerfläche kann eine Fläche einer Probe angelegt werden. Wenigstens eine der Stirnflächen hat ein Mehrfaches, insbesondere Vielfaches wie das Vierfache, einer Anlagerfläche. Die Anlagerfläche bzw. Anlagefläche ist eine Fläche für das Anliegen der Probe. Die Anlagefläche bietet ein Lager und kann als das eigentliche Widerlager bezeichnet werden. Durch die Vervielfachung der Anlagerfläche durch die Stirnfläche können solche Proportionen geschaffen werden, dass das Widerlager wenigstens vier Anlageflächen als Schlagflächen umfasst. Es kann auch zu einer Ausgestaltung gesagt werden, mehrere Anlagerflächen werden zu einer Stirnfläche zusammengefasst. Teil der Stirnfläche ist eine erste Anlagerfläche. Teil der Stirnfläche ist eine zweite Anlagerfläche. Einzelne Anlagerflächen werden zu einer größeren Fläche nebeneinander liegend zusammengesetzt, die Teil der oder in Gänze die Stirnfläche darstellen kann.

Das Pendelschlagwerk mit einem U-förmigen Hammer hat als ein Bauteil einen Schlagbock. Zahlreiche Aspekte eines Schlagbocks sind zuvor erörtert worden. Ein besonders vorteilhaftes Pendelschlagwerk ist ein Pendelschlagwerk mit einem U-förmigen Hammer. Das Pendelschlagwerk ist mit einem Hammer ausgestattet, der an einem Pendelarm angebracht wie ein umgedrehter Buchstabe "U" aussieht. Eine Breite des Hammers kann von Schenkel zu Schenkel (z. B. jeweils außen gemessen) bestimmt werden. Ein Hammer mit einer Breite von nicht mehr als 180 mm, vorzugsweise nicht breiter als 150 mm, ist ein kompakter Hammer. Die Finne bzw. Schlagfinne kann dann im Inneren, zwischen den beiden Schenkeln des "U" angesiedelt sein.

Für einen ausgeglichenen Hammer kann die Finne im geometrischen Mittelpunkt angeordnet werden. Ein Idealer Zustand ist gegeben, wenn die Finne und ein geometrischer Mittelpunkt des gesamten Pendels zusammenfallen. In einer günstigen Ausgestaltung ist die Finne mittig zu einer Breite des Durchschwingraums platziert. Wie zuvor schon angeklungen, ist ein Durchschwingraum dort zu verorten, wo zwischen einem ersten Element wie einem ersten Lagerstück des Widerlagers und einem zweiten Element wie einem zweiten Lagerstück des Widerlagers der Hammer, insbesondere die Finne durchschwingen kann. Der Bereich ist durchschwingbar gestaltet. Zwischen den Lagerstücken ist der Durchschwingraum.

Der Durchschwingraum wird gelegentlich noch durch vorhandene Prallbleche eingeschränkt. Die Prallbleche begrenzen den Durchschwingraum seitlich. Die Prallbleche schützen den Hammer vor Schäden durch Teile der Probe. Die Prallbleche können zudem dazu beitragen, die Messgenauigkeit zu steigern. Nachteilig ist aber, dass die Prallbleche Platz benötigen, der wiederum dem Durchschwingraum abgeht bzw. fehlt.

Die Erfindung lässt sich vorteilhaft in einem Verfahren für einen Versuch mit einem Pendelschlagwerk, wie einen Kerbschlagversuch an einer Probe, vorzugsweise ein Kerbschlagversuch nach Charpy, realisieren.

Damit ein Versuch an einer Probe, insbesondere ein Versuch mit einer metallischen Probe, in einem Pendelschlagwerk durchgeführt werden kann, muss der Versuch vorbereitet werden. Besonders geeignet sind Pendelschlagwerke, die jeweils mit einem U-förmigen Hammer ausgestattet sind, z. B. aufgrund des kompakten Aufbaus, z. B. aufgrund der Annäherung an ein idealisiertes Pendel mit seiner Massenkonzentration im Schlagpunkt. In Pendelschlagwerken können Versuche nach Charpy ausgeführt werden. Ein solcher Versuch ist auch unter dem Namen Kerbschlagbiegeversuch geläufig.

Vor dem Versuch, z. B. zur Bestimmung von Materialeigenschaften, wird die Probe, z. B. die metallische Probe, auf ein Auflager gelegt. Die Probe sollte auf dem Auflager so angeordnet werden, dass die auf dem Auflager ruhende Probe an einem Widerlager anliegt. Das Widerlager weist Anlagerflächen auf. Gegen zwei der Anlagerflächen liegt die Probe an. Das Widerlager bietet an seinen Anlagerflächen eine Stelle bzw. einen Bereich, an dem die Probe positioniert ist. Die Positionierung kann durch eine Vorrichtung wie eine Zentriervorrichtung, die z. B. zwischen Widerlager und Auflager angeordnet sein kann, gefördert werden.

Das Widerlager hat wenigstens ein erstes Lagerstück. Das Widerlager wird mithilfe des Lagerstücks gebildet. Das Lagerstück ist größer als eine einzige Schlagfläche. Das Lagerstück weist mehrere Schlagflächen auf. Die Schlagflächen sind auf einer Stirnfläche des Widerlagers bzw. des Lagerstücks. Die Stirnfläche und die Schlagfläche fallen bereichsweise zusammen. Die Schlagfläche ist Teil der Stirnfläche. Als Randnotiz sei vergegenwärtigt, dass nicht jede Fläche eine Schlagfläche sein kann. Einschlägige Normen bestimmen klare Anforderungen an Schlagflächen, z. B. in Bezug auf die im Randbereich vorhandenen Radien.

Zwischen den Schlagflächen kann ausgewählt werden. Der Schlagbock bietet mehrere Einbaulagen. In Abhängigkeit einer Einbaulage des Lagerstücks ist eine der Anlagerflächen als Teil der Stirnfläche vorhanden. Durch eine geänderte Einbaulage des Lagerstücks wird eine weitere Anlagerfläche an dem gleichen Lagerstück zur Verfügung gestellt. Die Stirnfläche ist - zumindest durch gedachte Sektorengrenzen - in mehrere Schlagflächen aufteilbar. Mehrere Schlagflächen gehören zu der gleichen Stirnfläche.

Die Erfindung kann ihre Vorteile besonders gut ausspielen, wenn das Lagerstück verschiedene Einbaulagen hat, die durch einfache Bewegungen oder Handgriffe eingenommen werden können. Durch Drehung um eine Achse, insbesondere eine Achse, die durch das Lagerstück hindurch geht, z. B. entlang seiner längsten Erstreckung, findet ein Wechsel von einer ersten Schlagfläche zu einer zweiten Schlagfläche statt. In einer alternativen Ausgestaltung findet durch Tausch mit einem zweiten Lagerstück ein Wechsel zwischen den Schlagflächen statt. In einer weiterführenden Ausgestaltung ist ein Lagerstück so gestaltet, dass sowohl Drehungen als auch ein Tausch zwischen den beiden Lagerstücken eines Widerlagers vorgenommen werden können und beide Lagerstücke mit veränderten Schlagflächen in dem Schlagbock einbaubar sind. Im Sinne einer effizienten Produktion, und auch im Sinne einer vorteilhaften Materialwirtschaft, sind die wenigstens zwei ein Widerlager bildenden Lagerstücke identisch. Beide Lagerstücke sind als Teile eines Lagerbocks ausgestaltet. Insbesondere sind die Lagerstücke die identischen Teile eines Lagerbocks. Die Lagerstücke sind als identisch austauschbare Teile ausgestaltet.

Abgesehen von der Anordnung des Schlagbocks mit dem Widerlager bzw. der Anordnung des Pendelschlagwerks mit dem Durchschwingraum hat ein vorteilhafter Schlagbock noch zahlreiche weitere Besonderheiten, von denen nachfolgend einige mit ihren eigenständigen Aspekten vorgestellt werden sollen.

Ein Widerlager kann also mehrteilig gestaltet sein. Das Widerlager umfasst wenigstens zwei Lagerstücke. Die Position, es kann auch gesagt werden, die Einbaulage der Lagerstücke befindet sich an dem Schlagbock. Der Schlagbock weist Ausnehmungen auf, die als Aufnahmen für die Lagerstücke bestimmt sind. Die Lagerstücke rücken in das Innere des Schlagbocks von einem Rand des Schlagbocks her. Der Schlagbock hat zurückversetzte Ausnehmungen benachbart zu dem Durchschwingraum. Die Ausnehmungen stellen vorzugsweise in eine Wand des Schlagbocks hineingreifende Bereiche dar. Diese Bereiche werden durch die Lagerstücke aufgefüllt. Die Lagerstücke werden im eingebauten Zustand Teil des Schlagbocks. Der Schlagbock ist mehrteilig. Zwei Teile des Schlagbocks sind die Lagerstücke. Die Lagerstücke liegen - zumindest teilweise - verschränkt in Wandbereichen des Schlagbocks. Ein Lagerstück wird durch die übrige Wand des Schlagbocks flankiert. Der Aufnahmeraum des Schlagbocks für das Lagerstück ist stufenartig und bietet eine Auf- bzw. Stand- oder Tischfläche und eine Seitenfläche zur flächigen Berührung zwischen einer Wand des Schlagbocks und wenigstens zwei Seiten des Lagerstücks.

Ein Lagerstück sollte mit dem übrigen Schlagbock befestigbar sein. In diesem Fall hat wenigstens eines der Lagerstücke eine Befestigung. Das Lagerstück ist zuverlässig arretiert, wenn die Befestigung in zweierlei Richtungen eine Ortsfixierung des Lagerstücks erlaubt. Die Ortsfixierung in zweierlei Richtungen, d. h. in zwei unterschiedlichen Richtungen, kann zur Fixierung an einen Innenwandabschnitts des Schlagbocks ausgelegt sein. An wenigstens einem Innenwandabschnitt des Schlagbocks erlaubt die Ortsfixierung eine lagestabile und lagefixierte Positionierung zwischen Lagerstück und Schlagbock.

Sind die beiden Lagerstücke nicht nur in Bezug auf ihre Abmessungen identisch, sondern auch in Bezug auf ihre Stirnflächen symmetrisch, fördert dies den Wechsel zwischen Einbaulagen der Lagerstücke. Ist eine Symmetrie zwischen den zwei Lagerstücken eines Widerlagers in Bezug auf wenigstens eine ihrer Arretierungen gegeben, können die Lagerstücke von links auf rechts und andersherum ausgetauscht werden. Es bieten sich mehr Einbaulagen.

Als Befestigungsmittel sind Schrauben geeignet. Der Schlagbock kann Befestigungsmittel aufweisen, die in die Bauteile des Schlagbocks hineinversenkbar sind. Ein geeignetes Befestigungsmittel ist eine versenkbare Schraube. Versenkbare Stifte oder bajonettartige Arretierungen können äquivalent gleiche Wirkungen als Befestigungsmittel des Widerlagers entfalten. Das versenkbare Befestigungsmittel stellt an einer Schlagbockbasis eine Art der Befestigung dar, die mit einer versenkbaren Mutter verschraubt werden kann. Besonders vorteilhaft ist es, wenn entweder ein Kopf der versenkbaren Schraube oder die versenkbare Mutter zwei Aufnahmeräume in dem Widerlager auffinden. Der Nutzen durch die Befestigungsmittel kann gesteigert werden, wenn die Befestigungsmittel abhängig von der Einbaulage des Widerlagers in dem Schlagbock wechselweise verwendbar sind. Eine Art des wechselweisen Einbaus kann eine spiegelbildliche Drehung zwischen Befestigungsmitteln und Lagerstück sein.

Nach verschiedenen Untersuchungen hat es sich gezeigt, dass besonders vorteilhafte Befestigungsmittel Innensechskantschrauben sind. Der Schlagbock kann so gestaltet sein, dass wenigstens ein Lagerstück durch zwei Befestigungselemente zu befestigen ist. Die beiden Innensechskantschrauben, die vorzugsweise in unterschiedliche Richtungen orientiert sind, stellen die Befestigung des Lagerstücks an dem Schlagbock sicher. Mithilfe der beiden Befestigungsmittel formt sich das Lagerstück in den Schlagbock ein. Befestigungsmittel, Lagerstück und übriger Schlagbock werden zu einem integrierten bzw. kompakten Teil.

Vorteilhafterweise hat der Schlagbock wenigstens zwei Anlagerflächen. Besonders vorteilhaft ist es, wenn es wenigstens zwei Anlagerflächen auf einer einzigen Stirnfläche gibt. Die Anlagerflächen können zueinander versetzt angeordnet sein. Der günstigen Verwendung des Lagerstücks zuträglich ist es, wenn die Anlagerflächen in der gleichen Ebene liegend angeordnet sind.

Besonders vorteilhaft ist es, wenn die Stirnfläche eine erste Anlagerfläche und eine zweite Anlagerfläche hat. Die Stirnfläche eines Lagerstücks weist die beiden Anlagerflächen auf. Die Anlagerflächen liegen in einer "gedachten" Ebene, die sich über die Stirnfläche eines Lagerstücks erstreckt.

Der Schlagbock operiert vorzugsweise mit Lagerstücken mit mehreren Einbaurichtungen. Ein Lagerstück hat wenigstens zwei Einbaurichtungen, eine erste Einbaurichtung und eine zweite Einbaurichtung. Zwischen den Einbaurichtungen kann gewechselt werden. Durch eine Achsdrehung kann zwischen den Positionen bzw. den Orientierungen des Lagerstücks variiert werden. Ein Wechsel zwischen den Einbaurichtungen eines Lagerstücks ist möglich.

Das Lagerstück weist mehrere Flächen auf. Eine der Flächen ist die Stirnfläche. Der Schlagbock ist mit einem Freiraum auf die Kontur des Lagerstücks abgestimmt. Das Lagerstück liegt mit wenigstens zwei Flächen an Ebenen des übrigen Schlagbocks an. Das Lagerstück und der Schlagbock werden zu einem insgesamt geformten bzw. ausgeformten Teil. Von den Flächen des Lagerstücks sollte idealerweise die Stirnfläche die breiteste Fläche des Lagerstücks darstellen. Die zur Stirnfläche abgewandte Seite, es kann auch gesagt werden, die Rückseite, ist schmäler als die Stirnfläche. Wird das Lagerstück parallel zur Stirnfläche mehrfach geschnitten, so ist jede Schnittfläche kleiner als die Stirnfläche. Das Widerlager ist hinterschnitten. Von der breiten Stirnfläche zu dem Grundkörper, der vorzugsweise ein länglicher Körper ist, verläuft schräg sich verjüngend eine Hinterschnittfläche. Durch einen Hinterschnitt mit mehr als 10° erfolgt eine Verjüngung des Lagerstücks in Richtung auf die Rückseite. Der Hinterschnitt führt zu einer Aufweitung des Durchschwingraums, wenn die Lagerstücke in ihren vorgesehen Positionen im Schlagbock liegen. Die Hinterschnitte an den beiden Lagerstücken stellen einen sich erweiternden Durchschwingraum her.

Ist der Schlagbock so gestaltet, dass zahlreiche Anlagerflächen pro Widerlager zur Verfügung stehen, können die Anlagerflächen verschleißabhängig oder bedarfsabhängig nach und nach getauscht werden. Ein Widerlager hat z. B. acht Anlagerflächen. Das aus mehreren Teilen bestehende Widerlager umfasst acht Anlagerflächen. Die Anlagerflächen können durch einen Links-Rechtstausch verändert werden. Ein linkes Lagerstück wird zu einem rechten Lagerstück. Ein rechtes Lagerstück übernimmt die Position des linken Lagerstücks. Durch den Austausch von links nach rechts und von rechts nach links wird eine andere Fläche zur Anlagerfläche auf der jeweiligen Stirnfläche des Lagerstücks. Auch kann ein Lagerstück so entworfen werden, dass durch eine Achsdrehung eine Fläche der Stirnfläche zu einer Anlagerfläche wird. So lässt sich eine Fläche einzeln zu einer Anlagerfläche umqualifizieren. Eine Anlagerfläche kann einer Probe gegenüberliegend angeordnet werden. Besonders viele Einbaulagen und Einbaustellungen ergeben sich, wenn sowohl eine Rechts-Links-Tausch von zwei Lagerstücken möglich ist als auch eine Drehung eines Lagerstücks um eine Achse des Lagerstücks. Im Betrieb bzw. nach einem entsprechenden Verbrauch kann dann die eine Anlagerfläche gegen eine andere, noch intakte Anlagerfläche ausgetauscht werden.

An den Bereichen, die mit den Widerlagerelementen in Verbindung stehen, können Segmente an dem Schlagbock gebildet werden. Die Stirnflächen setzen sich aus Segmenten zusammen. Wenigstens vier Segmente haben eine Mindestflächengröße. Die Flächengröße der Segmente entspricht zumindest einer Anlagerfläche. Die Segmente haben wenigstens die Abmessungen einer der Anlagerflächen. Die Segmente können aber auch größer als eine einzelne Anlagerfläche sein.

Der Schlagbock weist Schlagflächen auf. Die Schlagflächen sind für die Aufnahme von Schlagenergie, die über die Probe in den Schlagbock eingeleitet wird, vorgesehen. Die Schlagfläche bzw. eine Schlagfläche geht in einen Radius über. Der Radius führt in einer besonders günstigen Gestaltung des Lagerstücks tangential in den Hinterzug. Der Radius mündet in die Fläche des Hinterzugs aus.

Der Schlagbock besitzt Stirnflächen. Eine Stirnfläche, die sich an einem Lagerstück befindet, wird von wenigstens zwei Radien begrenzt. Wenigstens eine Stirnfläche geht in zwei Radien über. Ein Lagerstück kann auch so gestaltet sein, dass es sogar vier Radien aufweist. Auch können wenigstens zwei Phasen seitlich eine Stirnfläche begrenzen.

Zu dem Schlagbock gehört auch das Auflager. Das Auflager kann geteilt ausgeführt sein. In diesem Fall kann das Auflager als geteiltes Auflager bezeichnet werden. Ein Auflager hat z. B. wenigstens zwei Auflagerböcke. In Abhängigkeit seiner Einbaulage in den Schlagbock gibt so ein Auflagerbock einen unterschiedlichen Bereich des Widerlagers frei. Ein Bereich des Widerlagers wird durch einen Auflagerbock als Anlagerfläche freigeben. In Abhängigkeit des Auflagers bestimmt sich die Anlagerfläche eines Lagerstücks des Widerlagers.

Die Erfindung zeigt auf, dass es auch andere Möglichkeiten gibt, die Stand- und Nutzungszeiten von besonders belasteten Bauteilen und Baugruppen in Pendelschlagwerken zu steigern, ohne zwangsweise an der Materialeigenschaft, insbesondere an die Härte des Bauteils bzw. der Baugruppe immer höhere Anforderungen zu richten. Die in das Widerlager eingebrachte Schlagenergie darf von dem Widerlager bzw. seinem Lagerstück aufgenommen werden. Treten Schäden an der Schlagfläche auf, bietet das Lagerstück eine weitere Schlagfläche in Nachbarschaft zu der ersten Schlagfläche. Das Lagerstück kann weiterhin verwendet werden. Das Lagerstück offeriert mehrere Schlagflächen, aus denen ein Nutzer des Pendelschlagwerks auswählen darf. Dank mehrerer Einbaulagen, die ein einziges Lagerstück an einem Schlagbock vorfindet, lassen sich verschiedene Flächen des Lagerstücks als Anlagerflächen nutzen. Selbst eine gestauchte Anlagerfläche sorgt noch nicht für ein Ende der Verwendung des Lagerstücks. Das Lagerstück wird einfach in einer veränderten Einbaulage weiterhin eingesetzt.

Basierend auf der Idee, dass ein kalibriertes Lagerstück bzw. Widerlager kein erneutes "Freifahren" benötigt, wenn es nur verlagert wird, jedoch weiterhin, ggf. mit einem zweiten, gleichartigen Lagerstück zur Verfügung steht, sind höhere Standzeiten durch ein und das gleiche Widerlager bzw. seine Lagerstücke erzielbar.

Die zuvor dargestellten Kombinationen und Ausführungsbeispiele lassen sich auch in zahlreichen weiteren Verbindungen und Kombinationen betrachten.

So gibt es u. a. die Möglichkeit, Lagerstücke mit identischen Abmessungen aber unterschiedlichen Rundungen oder Phasen an den Grenzen der Stirnfläche zu verwenden. Auch ist es möglich, Lagerstücke zu verwenden, die aus unterschiedlichen Werkstoffen, z. B. mit unterschiedlichen Härten, hergestellt sind. Ein vorhandener Hinterzug vermeidet ein Verkanten einer angeschlagenen Probe. Das Prinzip bzw. die Lehre der vorliegenden Erfindung lässt sich in weiten Teilen aber auch dann anwenden, wenn der Hinterzug an dem Lagerstück nicht vorhanden ist.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 einen Grundkörper eines Pendelschlagwerks,
Figur 2 eine weitere Ansicht des Grundkörpers aus Figur 1,
Figur 3 einen Ausschnitt aus Figur 1 mit einer positionierten Probe vor einem Widerlager,
Figur 4 eine perspektivische Ansicht des Schlagbocks aus Figur 1 mit dem Widerlager,
Figur 5 eine perspektivische Ansicht eines Lagerstücks für ein Widerlager aus Figur 4 und
Figur 6 eine weitere Ausführungsform eines Lagerstücks für einen Schlagbock eines Pendelschlagwerks
   zeigen.

### Figurenbeschreibung

Figur 1 und Figur 2 zeigen einen Grundkörperaufbau eines Pendelschlagwerks 2, das insbesondere für Kerbschlagversuche nach Charpy geeignet ist. Der Grundkörperaufbau des Pendelschlagwerks 2 ist durch weitere Komponenten, die als Module bereitstellbar sind (nicht dargestellt) ergänzbar. Das Pendelschlagwerk 2, wie in Figur 1 gezeigt ist, umfasst einen Ständer 3, der auf einer Basis 11 angebracht ist. Die Basis 11 ist als Fundamentplatte mit Bohrungen für Halterungen (ohne Bezugszeichen) ausgestaltet. An einem von der Basis 11 beabstandeten Bereich des Ständers 3 befindet sich eine Aufhängung 5 für einen Pendelhammer 4, die mit einem Antrieb (nicht dargestellt) zum Anheben des Pendelhammers 4 ausgestattet werden kann. An dem Ständer 3 ist eine Halterung 6 für einen Auslösemechanismus (nicht dargestellt) vorhanden, mit der vor einem Kerbschlagversuch der Pendelhammer 4 an einer auslösbaren Einhängung 7 in einer aufgerichteten Stellung (nicht gezeigt) gehalten werden kann. Der Pendelhammer 4 dient dazu, mithilfe eines Hammers 8, der eine Finne 9 dreiseitig flankiert, eine Energie von z. B. (maximal) 450 J (Joule) auf eine Probe 98 einwirken zu lassen. Mit einer gedachten Blickrichtung in einer Schwingebene des Pendelhammers 4 lässt sich die einem umgekehrten "U" ähnliche Form des Hammers 8 besonders gut einsehen. Der Hammer 8 erstreckt sich wie eine Brücke über der Finne 9. Unter der Aufhängung 5 ist auf der Basis 11 ein Schlagbock 12 angeordnet. Der Schlagbock 12 bietet eine Schlagkraftaufnahme 10 für eine Schlagkraft des Pendelhammers 4, wobei eine aufgenommene Schlagkraft über eine Schlagbockbasis 14 auf die Basis 11 abführbar ist.

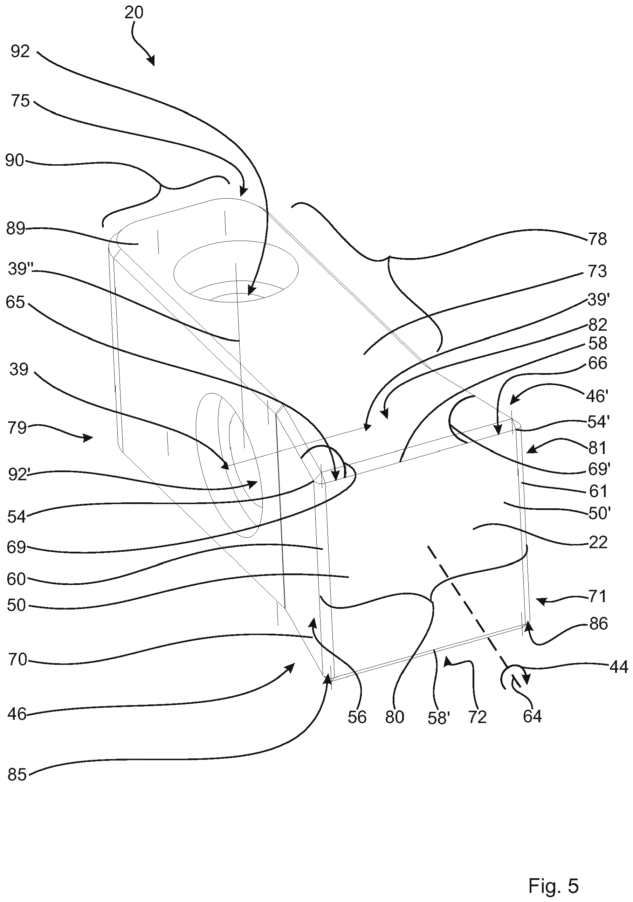

Entgegen einer Schlagrichtung des Pendelhammers 4 ist dem Schlagbock 12 ein Auflagerbock 15 vorgeordnet, der auch als ein Teil des Schlagbocks 12 angesehen werden kann. Zwischen der Schlagbockbasis 14 und dem Auflagerbock 15 ist ein Zwischenraum 95 vorgesehen. In den Zwischenraum 95 kann z. B. eine Probenzange (nicht dargestellt) zur Probenzufuhr einfahren. In einer alternativen Ausgestaltung kann der Zwischenraum 95 für eine elektromagnetische Probenzentriervorrichtung genutzt werden. Der Auflagerbock 15 stützt ein Auflager 16 gegen die Basis 11 ab. Das Auflager 16 ist einem Teil des Widerlagers 18 zugeordnet. Ein weiterer Teil des Auflagers 16 ist einem zweiten Teil des Widerlagers 18' zugeordnet, der in Figur 1 durch den Hammer 8 verdeckt ist. Mithilfe des Auflagers 16 lässt sich eine Probe 98 vor ein Widerlager 18, 18' an dem Schlagbock 12 halten. Das Auflager 16 ist eine Positionierungshilfe für die Probe 98. Für eine besonders genaue Positionierung umgibt ein Prallblech 96 an dem Auflager 16 die Probe 98 zumindest zweiseitig. Das Prallblech 96 verläuft zwischen der Probe 98 und einem Schenkel des Hammers 8. Das Prallblech 96 hat eine Schutzfunktion für den Pendelhammer 4 und dient insbesondere einer weiteren Erhöhung einer Messgenauigkeit. Die Probe 98 hat einen Bewegungsspielraum von mindestens 2 mm, vorzugsweise 10 mm innerhalb der Begrenzung, die das Prallblech 96 in eine erste Richtung (siehe z. B. Richtung 39 in Figur 5) bietet. Das Prallblech 96 bietet außerdem einen Bewegungsspielraum für die Probe 98 in eine zweite Richtung (siehe z. B. Richtung 39' in Figur 5). Das Auflager 16 ist den Lagerstücken, wie dem Lagerstück 20, zugeordnet. Das Prallblech 96 schränkt den Bewegungsspielraum ein. Das Widerlager 18, 18' weist eine Paarform auf. In der Paarform ist das Widerlager 18, 18' einem Lagerbock 17, 17' zugeordnet. Der Lagerbock 17, 17' kann auch als ein Lagerbockpaar 17, 17' bezeichnet werden, das mit dem Schlagbock 12 fest verbunden ist. Der Durchschwingraum 94 zwischen den Paaranordnungen 16; 17, 17'; 18, 18' wird von der Probe 98 überbrückt. Der Ausschnitt A von Figur 1 ist in Figur 3 vergrößert herausgezeichnet.

Das Pendelschlagwerk 2 in der Ansicht von Figur 2 zeigt den Pendelhammer 4 in einer Stellung, in der der Hammer 8 den Auflagerbock 15 fast vollständig freigibt. Das Prallblech 96, das (normalerweise) an dem Auflagerbock 15 befestigt ist, wurde in einem Bereich abgenommen, der eine Draufsicht freigibt, sodass die Probe 98 einsehbar ist. Das Prallblech 96 ist zweiteilig und paarweise an dem Schlagbock 12 angeordnet. Das Prallblech 98 befindet sich in einer Normalenrichtung vor den Stirnflächen 22, 22' der Lagerstücke 20, 21. Das Prallblech 98 weist eine Winkelform auf und begrenzt einen Bewegungsspielraum der Probe 98 in mindestens zwei Richtungen, wie eine Horizontalrichtung und eine Vertikalrichtung. Die Probe 98 wird von dem Auflagerbock 15 zweiseitig getragen. Auf dem Auflagerbock 15 ist die Probe 98 gegen das Widerlager 18, 18' verbringbar. Der Auflagerbock 15 umfasst ein zweiteiliges Auflager 16, 16', nämlich ein erstes Auflagerteil 16 und ein zweites Auflagerteil 16'.

Die Auflagerteile 16, 16' sind jeweils für ein Probenende vorgesehen. Die Auflagerteile 16, 16' lassen jeweils einen Durchschwingraum 94 frei. Das erste Auflagerteil 16 befindet sich vor einem ersten Widerlagerteil 18. Das zweite Auflagerteil 16' befindet sich vor einem zweiten Widerlagerteil 18'. Die Probe 98 liegt an den Stirnflächen 22, 22' der Lagerstücke 20, 21 an. In weiteren Ausführungsformen, z. B. mit automatischer Probenzufuhr, kann der Auflagerbock 15 bzw. die Auflagerteile 16, 16' aktuatorisch entlang einer Hammerschlagrichtung verschoben werden, um das Einlegen einer Probe 98 zu erleichtern. Der Auflagerbock kann aus zwei Auflagerböcken zusammengesetzt sein. Der Auflagerbock 15 bzw. die zwei Auflagerböcke gemeinsam weisen einen U-förmige Querschnitt auf, durch den ein umgekehrt U-förmiger Hammer mit einer Finne hindurchführbar ist.

In Figur 3 ist nur ein unterer Bereich des Auflagerbocks 15 gezeigt, weshalb die Probe 98 in Figur 3 freischwebend vor dem Widerlager 18, 18' eingezeichnet ist.

Zwischen dem Hammer 8 und dem Schlagbock 12 des Pendelschlagwerks 2 in Figur 3 befindet sich die Probe 98. Die Probe 98 liegt an dem Widerlager 18, 18' des Schlagbocks 12 an. Zwischen dem ersten Teil des Widerlagers 18 und dem zweiten Teil des Widerlagers 18' ist ein freibleibender Teil des Durchschwingraums 94 vorhanden. Der Durchschwingraum 94 bietet genügend Platz für die Finne (s. Finne 9 in Figur 1) und eine Probe, wie die Probe 98, die bei einem Kerbschlagversuch durchgeschlagen und mitgenommen wird. Der Durchschwingraum 94 steht für eine Relativbewegung zwischen dem Hammer 8 mit der Finne einerseits sowie dem Schlagbock 12 andererseits zur Verfügung. Der Durchschwingraum 94 erstreckt sich bereichsweise zwischen dem ersten Lagerstück 20 und einem zweiten Lagerstück 21. Der Durchschwingraum 94 erstreckt sich zwischen den Lagerbockteilen 17, 17' hindurch. Der Durchschwingraum 94 erstreckt sich durch eine Ausnehmung des Auflagerbocks 15 hindurch. Es kann auch gesagt werden, dass sich der Durchschwingraum 94 an dem Schlagbock 12 mit dem Auflagerbock 15, der außen vorbei am Durchschwingraum 94 angeordnet ist, erstreckt. Der Hammer 8 bildet eine äußere Begrenzung des Durchschwingraums 94. Das zweite Lagerstück 21 ist gleichartig wie das erste Lagerstück 20 gestaltet. Die Abmessungen des ersten Lagerstücks 20 und des zweiten Lagerstücks 21 stimmen überein. Das Widerlager 18 umfasst eine Anlagerfläche 65 auf einer Stirnfläche 22 eines ersten Lagerstücks 20. Das erste Lagerstück 20 weist eine zweite Anlagerfläche 66 auf, die als Reserve von der Probe 98 freibleibend vorgehalten wird. Eine Anlagerfläche der Lagerstücke 20, 21, wie die Anlagerfläche 65, umfasst eine Schlagfläche, wie die Schlagfläche 25, die zur Aufnahme einer Schlagkraft dient. Das erste Lagerstück 20 ist in eine erste Wand 26 eingesetzt. Nach einem anderen Aspekt ist das erste Lagerstück 20 an einem ersten Innenwandabschnitt 27 angeordnet. Das zweite Lagerstück 21 ist spiegelbildlich zum ersten Lagerstück 20 in eine Ausnehmung einer zweiten Wand 26' eingesetzt und dadurch an einem zweiten Innenwandabschnitt 27' angeordnet. Der Hammer 8 kann frei an der ersten Wand 26 und der zweiten Wand 26' vorbeischwingen. Die Finne (s. Finne 9 in Figur 1) ist durch die Aufhängung (s. Aufhängung 5 in Figur 1) den beiden, einander gegenüberliegenden Innenwandabschnitten 27, 27' mittig zugeordnet, ohne die Lagerstücke 20, 21 berühren zu können.

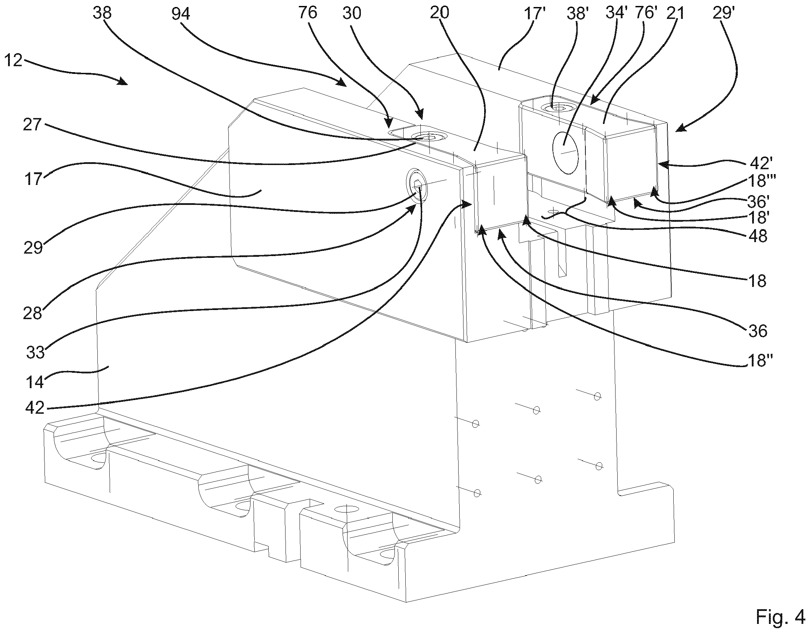

Figur 4 zeigt perspektivisch einen Teil des Schlagbocks 12 aus Figur 1 in einer Ansicht, in der die paarweise Anordnung des ersten Lagerstücks 20 und des zweiten Lagerstücks 21 an dem Schlagbock 12 besonders gut einsehbar ist. Das Auflager 16 aus Figur 1 wurde in der Darstellung der Figur 4 weggelassen. Das erste Lagerstück 20 und das zweite Lagerstück 21 begrenzen, wie in Figur 4 gezeigt ist, eine Aufweitung 48 des Durchschwingraums 94. Das erste Lagerbockteil 17 und das zweite Lagerbockteil 17' sind jeweils fest mit der Schlagbockbasis 14 verbunden. Das erste Lagerstück 20 ist über eine Befestigung 28 und über eine weitere Befestigung, nämlich die Arretierung 30, an dem Lagerbock 17 fixiert. Die Befestigung 28 umfasst eine Innensechskantschraube 33 mit einem versenkbaren Schraubenkopf 29. Die Innensechskantschraube 33 greift an dem Lagerbock 17 durch das erste Lagerstück 20 hindurch in eine Mutter, wie die Mutter 34', ein. Mithilfe der Befestigung 28 wird das erste Lagerstück 20 an den Innenwandabschnitt 27 angeschlossen. Wie das erste Lagerstück 20 ist auch das zweite Lagerstück 21 durch nebeneinander angeordnete Befestigungen, welche die Mutter 34' und ein Befestigungselement 38' umfassen, an dem Schlagbock 12 angebracht. Das Befestigungselement 38' ist in den Lagerbock 17' zur Arretierung des zweiten Lagerstücks 21 eingeschraubt. Die Mutter 34' sowie eine Innensechskantschraube (nicht dargestellt), wie die Innensechskantschraube 33, gehören zu einem Befestigungsmittel 29' für das zweite Lagerstück 21. Das erste Lagerstück 20 befindet sich in einer ersten Einbaulage 36 an einem ersten Wandabschnitt 76. Durch ein Lösen der Befestigungselemente 38, 38' und durch ein vollständiges Lösen der Befestigungsmittel 29, 29' sind das erste Lagerstück 20 und das zweite Lagerstück 21 von dem Schlagbock 12 entnehmbar. Das erste Lagerstück 20 befindet sich in der Einbaulage 36. Das unbefestigte, erste Lagerstück 20 ist in eine zweite Einbaulage 36' verbringbar. In einer ersten Einbaurichtung 42 liegt das erste Lagerstück 20 zumindest mit einer ersten Seite an einem ersten Wandabschnitt 76 an. Von dem ersten Lagerstück 20 ist eine zweite Einbaurichtung 42' einnehmbar, in der das erste Lagerstück 20 mit einer zweiten Seite, die sich gegenüber der ersten Seite befindet, an einem zweiten Wandabschnitt 76' des Schlagbocks 12 anliegt. Das erste Lagerstück 20 ist, anders gesagt, an dem zweiten Wandabschnitt 76' befestigbar. Als eine Alternative ist das erste Lagerstück 20 an dem ersten Wandabschnitt 76, z. B. bei einer Neu-Kalibrierung des Schlagbocks 12, um einen Winkel von 180° zu drehen. Entsprechend kann auch das zweite Lagerstück 21 umgedreht werden oder in die Einbaulage 36 verbracht bzw. mit der Einbaurichtung 42 an dem Schlagbock 12 verbaut werden, die in Figur 4 von dem ersten Lagerstück 20 eingenommen ist. An dem Schlagbock 12 ist ein erstes Widerlager 18, 18' und als Reserve, also für den Fall, dass das erste Widerlager 18, 18' verschlissen ist, ein zweites Widerlager 18", 18''' vorhanden. Durch eine Permutation oder eine Drehung der Lagerstücke 20, 21 an dem Schlagbock 12 lässt sich ungefähr die doppelte Anzahl von Kerbschlagversuchen an dem Schlagbock 12 ausführen.

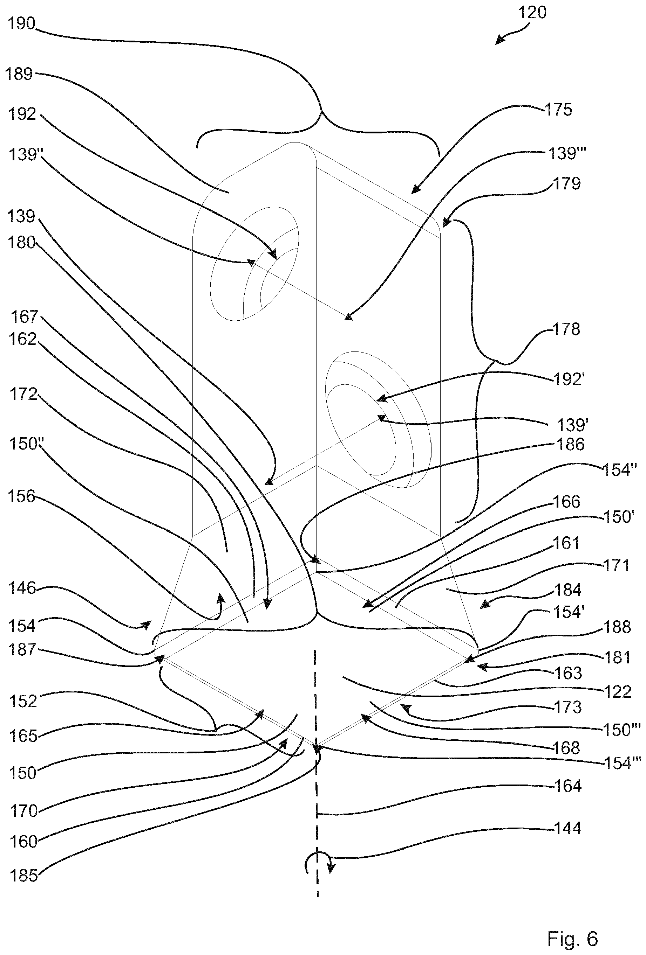

Beispielhaft für die beiden Lagerstücke 20, 21, die in Figur 4 zu sehen sind, ist das Lagerstück 20 in Figur 5 herausgezeichnet. Ähnliche Einzelheiten, die an dem Lagerstück 20 vorhanden sind und die sich auch in der Ausführungsform des Lagerstücks 120 wiederfinden lassen, sind mit um die Zahl "100" erhöhten Bezugszeichen in Figur 6 bezeichnet. Die Ausführungsformen von Figur 5 und Figur 6 werden daher gemeinsam diskutiert. Zur Erleichterung der Begriffszuordnung zwischen den Bezugszeichen von Figur 5 und Figur 6 wird auf die Bezugszeichenliste verwiesen. Ergänzend werden insbesondere Unterschiede des Lagerstücks 120 in Figur 6 im Vergleich zu dem Lagerstück 20 in Figur 5 erläutert.

Wie in Figur 5 zu sehen ist, befindet sich an einer Stirnseite 81 des Lagerstücks 20 ein Stirnbereich 80, auf dem eine ebene Stirnfläche 22 vorsteht. Die Stirnfläche 22 ist glatt, weist also keine Vertiefung auf. Die Stirnseite 81 ist ein erster Endbereich eines Lagerstückkörpers 89. Einen zweiten, der Stirnseite 81 gegenüberliegenden Endbereich des Lagerstückkörpers 89 bildet der Abschluss 75. Eine Lagerstücklängsachse 64, die in einer normalen Richtung der Stirnfläche 22 z. B. mittig zuordenbar ist, ist als gestrichelte Linie eingezeichnet. Durch eine Drehung 44 von 180° um die Lagerstücklängsachse 64 ist das Lagerstück 20 in zwei unterschiedlichen, einander entgegengesetzten Richtungen 39, 39' an dem Schlagbock 12 (siehe Figur 4) einsetzbar. Eine Vertikalrichtung 39" zeigt eine Richtung der Arretierung auf dem Schlagbock 12 an. Die Richtung 39" für die Arretierung korrespondiert mit einer Beabstandung einer ersten Phase 58 von einer zweiten Phase 58', die die Stirnfläche 22 jeweils an zwei gegenüberliegenden Seiten begrenzen. Die Phasen 58, 58' erstrecken sich parallel zueinander. Zwischen der ersten Phase 58 und der zweiten Phase 58' erstrecken sich eine erste Lagerstückrundung 60 und eine zweite Lagerstückrundung 61. Die Lagerstückrundungen 60, 61 bilden weitere, zweiseitige Begrenzung der Stirnfläche 22. Die entgegengesetzten Richtungen 39, 39' korrespondieren mit einer Beabstandung der Lagerstückrundungen 60, 61. Entlang der ersten Lagerstückrundung 60 befindet sich auf der Stirnseite 81 die erste Anlagerfläche 65. Entlang der zweiten Lagerstückrundung 61 befindet sich auf der Stirnseite 81 die zweite Anlagerfläche 66. Die erste Anlagerfläche 65 ist einem ersten Segment 50 der Stirnfläche 22 zuordenbar. Die zweite Anlagerfläche 66 ist einem zweiten Segment 50' der Stirnfläche 22 zuordenbar. Das erste Segment 50 und das zweite Segment 50' sind in der Stirnfläche 22 lateral voneinander beabstandet. Die erste Lagerstückrundung 60 und die zweite Lagerstückrundung 61 weisen jeweils einen übereinstimmenden Radius 54, 54' auf. Die Lagerstückrundungen 60, 61 sind als Kreiszylindermantelsegmentflächen 85, 86 ausgebildet. Die erste Kreiszylindermantelsegmentfläche 85 bildet einen gratlosen Übergang zwischen der Stirnfläche 22 und der ersten Lagerstückfläche 70. Der Übergang bildet sich durch einen tangentialen Flächenanschluss zwischen der Kreiszylindermantelsegmentfläche 85 und der Stirnfläche 22; er ist somit gratlos. Die zweite Kreiszylindermantelsegmentfläche 86 bildet in gleicher Weise wie die erste Kreiszylindermantelsegmentfläche 85 einen stufenlosen Anschluss zwischen der zweiten Lagerstückfläche 71 und der Stirnfläche 22. Den Übergang zwischen der Stirnfläche 22 und der dritten Lagerstückfläche 72 einerseits sowie der vierten Lagerstückfläche 73 andererseits bilden jeweils die Phasen 58, 58'. Somit ist die Stirnfläche 22 vierseitig begrenzt, wie ein Rechteck oder ein Quadrat. Die dritte Lagerstückfläche 72 und die vierte Lagerstückfläche 73 sind ebene Flächen, die sich von dem Stirnbereich 80 bis zum Abschluss 75 des Lagerstücks 20 erstrecken. Die erste Anlagerfläche 65 schließt mit der ersten Lagerstückfläche 70 einen Winkel 69 des Lagerstücks 20 ein, der weniger als 90° beträgt, wobei ein Apex des Winkels abgerundet ist. Gleichartig wie zwischen der ersten Anlagerfläche 65 und der ersten Lagerstückfläche 70 sind an der Stirnfläche 22 gegenüberliegend die zweite Anlagerfläche 66 und die zweite Lagerstückfläche 71 unter einem Winkel 69' angeordnet. Durch die Winkelstellung zwischen Anlagerfläche 65 und der ersten Lagerstückfläche 70 ist ein Hinterschnitt 46 ausgebildet, der sich als Hinterzug 56 an dem Lagerstück 20 bis zu einem Befestigungsbereich 78 erstreckt. Ein symmetrisch angeordneter Hinterschnitt 46' befindet sich an der zweiten Lagerstückfläche 71 bzw. wird durch die zweite Lagerstückfläche 71 gebildet. Die erste Lagerstückfläche 70 und die zweite Lagerstückfläche 71 begrenzen eine Keilbasis 82 des Lagerstücks 20. Die Keilbasis 82 geht mit einem konkaven Winkel in den Befestigungsbereich 78 über. Anders gesagt, umfasst der Lagerstückkörper 89 des Lagerstücks 20 eine Keilbasis 82 und einen Befestigungsbereich 78. In dem Befestigungsbereich 78 weist der Lagerstückkörper 89 eine Lagerstückkörperquerschnittsfläche 90 mit konstantem Begrenzungsmaß entlang der Längsachse 64 auf. Die erste Lagerstückfläche 70 ist ein Teil des Einsetzbereichs 79 des Lagerstücks 20, wobei die erste Anlagerfläche 65 als Reserve vorgehalten wird. Nur die zweite Anlagerfläche 66 ist in einer solchen Anordnung mit einer Probe (s. Figur 2 sowie Figur 3) zu belegen und in einem Kerbschlagversuch zu belasten. Nach einem Verschleiß der zweiten Lagerstückrundung 61 oder der zweiten Anlagerfläche 66 ist es möglich, durch einen Umbau an dem Schlagbock 12 (s. Figur 4) die erste Lagerstückrundung 60 und die erste Anlagerfläche 65 für weitere Kerbschlagversuche zu verwenden. Für den Ein- oder Umbau des Lagerstücks 20 an dem Schlagbock 12 (s. Figur 4) erfolgt die Befestigung durch die durchgängigen Bohrungen 92, 92' des Lagerstückkörpers 89. Die Bohrungen 92, 92' befinden sich in dem Befestigungsbereich 78 und erstrecken sich in einem rechten Winkel zueinander, der durch die Richtungen 39, 39', 39" in Figur 5 eingetragen ist. Besonders vorteilhaft ist, dass Proben (s. Probe 98 in Figur 2) nach einem Umbau des Lagerstücks 20 weiterhin exakt in einem festen Abstand bzw. einer gleichbleibenden Lage zur Aufhängung (s. Aufhängung 5 in Figur 1) an dem Schlagbock (s. Schlagbock 12 in Figur 2) positionierbar sind, was eine Vergleichbarkeit von Prüfergebnissen sicherstellt.

Die Ausführungsform des Lagerstücks 120 in Figur 6 unterscheidet sich von dem Lagerstück 20 in Figur 5 unter anderem dadurch, dass bei dem Lagerstück 120 in Figur 5 die erste Phase 58 durch eine dritte Lagerstückrundung 162 und die Phase 58' durch eine vierte Lagerstückrundung 163 ersetzt sind. Die dritte Lagerstückrundung 162 liegt an einer dritten Kreiszylindermantelsegmentfläche 187 und die vierte Lagerstückrundung 163 liegt an einer vierten Kreiszylindermantelsegmentfläche 188 vor. Die dritte Kreiszylindermantelsegmentfläche 187 verbindet die dritte Anlagerfläche 167 mit der dritten Lagerstückfläche 172. Die vierte Kreiszylindermantelsegmentfläche 188 verbindet die vierte Anlagerfläche 168 mit der vierten Lagerstückfläche 173. Die erste, zweite, dritte und vierte Kreiszylindermantelsegmentfläche 185, 186, 187, 188 umrahmen eine glatte Stirnfläche 122. Eine erste Anlagerfläche 165, eine zweite Anlagerfläche 166 sowie die dritte Anlagerfläche 167 und die vierte Anlagerfläche 168 befinden sich auf der Stirnfläche 122. Durch eine Drehung 144 um eine Längsachse 164 durch den Lagerstückkörper 189 sind die Anlagerflächen 165, 166, 167, 168 und die jeweils zugeordneten Lagerstückrundungen 160, 161, 162, 163 einer Probe (s. z. B. Probe 98 in Figur 2) zuordenbar. Die vier Lagerstückrundungen 160, 161, 162, 163 weisen jeweils einen gleichen, konstanten Radius 154, 154', 154", 154'" auf. Somit gibt es vier Richtungen 139, 139', 139", 139'" für eine Ortsfixierung des Lagerstücks 120, die durch eine Drehung um jeweils 90° um die Achse 164 nacheinander einnehmbar sind. In einer Paaranordnung von gleichen Lagerstücken, wie dem Lagerstück 120 sind die Lagerstücke 120 gegeneinander austauschbar. Der Stirnbereich 180 ist jeweils auf die Probe hin (s. z. B. Probe 98 in Figur 2) ausgerichtet. Ein Paar von Lagerstücken 120 liegt in einem Pendelschlagwerk vor, wobei die Lagerstücke 120 einzeln einsetzbar sind. Ein Paar von Lagerstücken, wie das Lagerstück 120, passt zu einem Schlagbock (nicht dargestellt), der sich von dem Schlagbock 12 in Figur 4 in dem Bereich der Einbaulagen 36, 36' unterscheidet. Der Schlagbock ist komplementär zu zwei, gleichartigen Lagerstücken, wie dem Lagerstück 120, geformt. Eine Anpassung eines Schlagbocks 12 an ein Lagerstück 120 ist z. B. durch Austausch einer Schlagbockbasis 14 oder durch Austausch der Lagerböcke 17, 17' möglich. Weitere Unterschiede gibt es im Vergleich zu der in Figur 4 gezeigten Befestigung 28 und der Arretierung 30 des Schlagbocks 12, die ebenfalls passgenau zu den Lagerstücken, wie dem Lagerstück 120, ausgebildet sind. Der Hinterschnitt 46 des Lagerstücks 20 (siehe Figur 5) führt zu einer keilstumpfartigen Form. Der Hinterschnitt 146 des Lagerstücks 120 (siehe Figur 6) schafft ein pyramidenstumpfartiges Lagerstück 120. Anders gesagt, liegt der Hinterschnitt 146 vollumfänglich an dem Lagerstückkörper 189 vor, entlang der Achse 64 in Figur 5 bzw. entlang der Achse 164 in Figur 6 betrachtet, bietet jeweils die Stirnseite 81 (in Figur 5) bzw. die Stirnseite 181 (in Figur 6) die größte Querschnittsfläche der Lagerstücke 20, 120 dar. Die Stirnfläche 122 umfasst vier Segmente 150, 150', 150", 150"'. Die vier Segmente 150, 150', 150", 150'" machen zusammen eine Flächengröße 152 aus. Eine Pyramidenbasis 184 des Lagerstücks 120 umfasst die Stirnfläche 122 und die ebenen Lagerstückflächen 170, 171, 172, 173. Die Pyramidenbasis bildet somit einen Hinterzug 156 an dem Lagerstück 120. Die Lagerstückflächen 170, 171, 172, 173 weisen in dem Befestigungsbereich 178 jeweils eine planparallele Fortsetzung bis zu dem Abschluss 175 auf. In dem planparallelen Befestigungsbereich 178 sind Lagerstückkörperquerschnittsflächen 190 in einer Normalenrichtung zuordenbar, die in der Regel kleiner als die Flächengröße 152 sind. In dem Befestigungsbereich 178 befinden sich zwei Bohrungen 192, 192' mit jeweils beidseitigen Einsenkungen für Schraubenköpfe bzw. Muttern. Das Lagerstück 120 ermöglicht einen noch sparsameren Materialeinsatz. Die an jedem einzelnen Lagerstück 120 vorhandenen vier Anlagerflächen 165, 166, 167, 168 sind für normgemäße Kerbschlagversuche ausgebildet.

Die in den einzelnen Figuren gezeigten Ausgestaltungsmöglichkeiten lassen sich auch untereinander in beliebiger Form verbinden.

### Bezugszeichenliste

- 2: Pendelschlagwerk
- 3: Ständer
- 4: Pendelhammer
- 5: Aufhängung, insbesondere Antrieb
- 6: Halterung für Auslösemechanismus
- 7: auslösbare Einhängung
- 8: Hammer
- 9: Finne
- 10: Schlagkraftaufnahme
- 11: Basis
- 12: Schlagbock
- 14: Schlagbockbasis
- 15: Auflagerbock
- 16, 16': Auflager
- 17, 17': Lagerbock
- 18, 18', 18", 18''': Widerlager
- 20, 120: erstes Lagerstück
- 21: zweites Lagerstück
- 22, 22', 122: Stirnfläche
- 25: Schlagfläche
- 26, 26': Wand
- 27, 27': Innenwandabschnitt
- 28: Befestigung
- 29, 29': Befestigungsmittel, insbesondere Schraubenkopf
- 30: Arretierung
- 33: Innensechskantschraube
- 34': Mutter
- 36, 36': Einbaulage
- 38, 38': Befestigungselement
- 39, 39', 39", 139, 139', 139", 139'": Richtung
- 42, 42': Einbaurichtung
- 44, 144: Achsdrehung
- 46, 46', 146: Hinterschnitt
- 48: Aufweitung
- 50, 50', 150, 150', 150", 150''': Segment
- 152: Flächengröße
- 54, 54', 154, 154',: Radius
- 154", 154''' 56, 156: Hinterzug
- 58, 58': Phase
- 60, 160: erste Lagerstückrundung
- 61, 161: zweite Lagerstückrundung
- 162: dritte Lagerstückrundung
- 163: vierte Lagerstückrundung
- 64, 164: Achse, insbesondere Lagerstücklängsachse
- 65, 165: erste Anlagerfläche
- 66, 166: zweite Anlagerfläche
- 167: dritte Anlagerfläche
- 168: vierte Anlagerfläche
- 69, 69': Winkel
- 70, 170: erste Lagerstückfläche
- 71, 171: zweite Lagerstückfläche
- 72, 172: dritte Lagerstückfläche
- 73, 173: vierte Lagerstückfläche
- 75, 175: Abschluss, insbesondere Endfläche
- 76, 76': Wandabschnitt
- 78, 178: Befestigungsbereich
- 79, 179: Einsetzbereich
- 80, 180: Stirnbereich
- 81, 181: Stirnseite
- 82: Keilbasis
- 184: Pyramidenbasis
- 85, 185: erste Kreiszylindermantelsegmentfläche
- 86, 186: zweite Kreiszylindermantelsegmentfläche
- 187: dritte Kreiszylindermantelsegmentfläche
- 188: vierte Kreiszylindermantelsegmentfläche
- 89, 189: Lagerstückkörper
- 90, 190: Lagerstückkörperquerschnittsfläche
- 92, 92', 192, 192': Bohrung
- 94: Durchschwingraum
- 95: Zwischenraum
- 96: Prallblech
- 98: Probe
- A: Ausschnitt

## Patentansprüche

1. Lagerstück (20, 21, 120),
insbesondere als Teil eines aus Gleichteilen geformten Widerlagerpaares (18, 18', 18", 18'''), mit wenigstens zwei Anlagerflächen (65, 66, 165, 166, 167, 168),
einer ersten Anlagerfläche (65, 165) und einer zweiten Anlagerfläche (66, 166), und mit wenigstens zwei Lagerstückflächen (70, 71, 72, 73, 170, 171, 172, 173),
einer ersten Lagerstückfläche (70, 170) und einer zweiten Lagerstückfläche (71, 171), das für einen Einbau als ein Widerlager (18, 18', 18", 18''') eines Pendelschlagwerks (2) geeignet ist,
wobei das Lagerstück (20, 21, 120) für ein Gegenlegen von Proben (98), insbesondere einer Probe (98) für einen Kerbschlagversuch nach Charpy, ausgebildet ist,
wofür das Lagerstück (20, 21, 120) die erste, insbesondere plane, Anlagerfläche (65, 66, 165, 166, 167, 168) hat, die für eine Schlagkraftaufnahme (10) einer eingebrachten Schlagkraft auf eine, insbesondere erste, Probe (98) geeignet ist,
**dadurch gekennzeichnet, dass**
das Lagerstück (20, 21, 120) mindestens zwei, vorzugsweise vier Einbaurichtungen (39, 39', 139, 139', 139", 139'", 42, 42') aufweist, zwischen denen durch eine Achsdrehung (44, 144), insbesondere eine Drehung um eine Lagerstücklängsachse (64, 164) herum, zu wechseln ist,
und dass das Lagerstück (20, 21, 120) mindestens die, von der ersten Anlagerfläche (65, 165) zumindest bereichsweise beabstandete, zweite, insbesondere plane, Anlagerfläche (66, 166) hat,
die für eine Schlagkraftaufnahme (10) einer eingebrachten Schlagkraft auf eine, insbesondere zweite, Probe (98) geeignet ist, und
dass die erste Anlagerfläche (65, 165) und die erste Lagerstückfläche (70, 170) einen Winkel (69) von weniger als 90° einschließen, und
dass die zweite Anlagerfläche (66, 166) und die zweite Lagerstückfläche (71, 171) einen Winkel (69') von weniger als 90° einschließen,
wobei sich zwischen der ersten Lagerstückfläche (70, 170) und der zweiten Lagerstückfläche (71, 171) ein Stirnbereich (80, 180) eines Körpers (89, 189) des Lagerstücks (20, 21, 120) befindet, der die erste Anlagerfläche (65, 165) und die zweite Anlagerfläche (66, 166) aufweist.

2. Lagerstück (20, 21, 120) nach Anspruch 1, **dadurch gekennzeichnet, dass** die erste Anlagerfläche (65, 165) und die zweite Anlagerfläche (66, 166) auf einer Stirnseite (81, 181) des Lagerstücks (20, 21, 120) planparallel nebeneinander angeordnet sind.

3. Lagerstück (20, 21, 120) nach Anspruch 1 oder Anspruch 2, **dadurch gekennzeichnet, dass**
der Stirnbereich (80, 180) keilstumpfartig oder pyramidenstumpfartig ausgebildet ist, wobei insbesondere die Stirnseite (81, 181) eine Keilbasis (82) oder eine Pyramidenbasis (184) bildet.

4. Lagerstück (20, 21, 120) nach einem der vorhergehenden Ansprüche, **dadurch**
**gekennzeichnet, dass**
die erste Anlagerfläche (65, 165) in eine erste zylindersegmentartige Lagerstückrundung (60, 160) übergeht und die zweite Anlagerfläche (66, 166) in eine zweite zylindersegmentartige Lagerstückrundung (61, 161) übergeht, wobei die erste Lagerstückrundung (60, 160) und die zweite Lagerstückrundung (61, 161) sich von einander beabstandet an unterschiedlichen Seiten des Lagerstücks (20, 21, 120) erstrecken.

5. Lagerstück (20, 21, 120) nach einem der vorhergehenden Ansprüche, **dadurch**
**gekennzeichnet, dass**
mindestens eine dritte zylindersegmentartige Lagerstückrundung (162) vorgesehen ist, die vorzugsweise entweder parallel zu einer (163) oder unter einem Winkel von 90° an eine weitere zylindersegmentartige Lagerstückrundung (160, 161) anschließt, wobei insbesondere mindestens eine der Anlagerflächen (165, 166, 167, 168) von wenigstens einer Lagerstückrundung (160, 161, 162, 163) und einer Anlagerfläche (165, 166, 167, 168) begrenzt ist und zwei Lagerstückrundungen (160, 161, 162, 163) entweder die erste (165) oder die zweite Anlagerfläche (166) umfassen.

6. Lagerstück (20, 21, 120) nach einem der vorhergehenden Ansprüche, **dadurch**
**gekennzeichnet, dass**
eine Fläche im Stirnbereich (80, 180) von wenigstens zwei Radien (54, 54', 154, 154', 154", 154'''), insbesondere von vier Radien (54, 54', 154, 154', 154", 154'''), und/oder zwei Phasen (58, 58') seitlich begrenzt ist.

7. Lagerstück (20, 21, 120) nach einem der vorhergehenden Ansprüche, **dadurch**
**gekennzeichnet, dass**
die erste Anlagerfläche (65, 165) von einer ersten Kreiszylindermantelsegmentfläche (85, 185) begrenzt ist und die zweite Anlagerfläche (66, 166) von einer zweiten Kreiszylindermantelsegmentfläche (86, 186) begrenzt ist, wobei
vorzugsweise die erste Kreiszylindermantelsegmentfläche (85, 185) und die zweite Kreiszylindermantelsegmentfläche (86, 186) mindestens 1 mm, vorzugsweise mindestens 10 mm, voneinander versetzt vorliegen.

8. Lagerstück (20, 21, 120) nach einem der vorhergehenden Ansprüche 2 bis 7, **dadurch gekennzeichnet, dass**
die Stirnseite (81, 181) wenigstens zwei Segmente (50, 50', 150, 150', 150", 150''') aufweist, die jeweils eine Flächengröße einer Anlagerfläche (65, 66, 165, 166, 167, 168) haben, wobei
insbesondere wenigstens vier Segmente (50, 50', 150, 150', 150", 150''') eine Stirnfläche (22, 122) bilden.

9. Lagerstück (20, 21, 120) nach einem der vorhergehenden Ansprüche 2 bis 8, **dadurch gekennzeichnet, dass**
eine Fläche auf der Stirnseite (81, 181) eine breiteste Fläche des Widerlagers (18, 18', 18", 18'") darstellt, die hinterschnitten ist, wobei
durch einen Hinterschnitt (46, 46', 146) mit mehr als 10° eine Flächengröße der Fläche auf der Stirnseite (81, 181) auf eine, insbesondere parallel zu jener Fläche vorliegende, Lagerstückkörperquerschnittsfläche (90, 190) übergeht, wobei die Lagerstückkörperquerschnittsfläche (90, 190) weniger als 80 % der Flächengröße der Fläche auf der Stirnseite (81, 181) ist.

10. Lagerstück (20, 21, 120) nach einem der vorhergehenden Ansprüche, **dadurch**
**gekennzeichnet, dass**
die Anlagerfläche (65, 66, 165, 166, 167, 168) eine Schlagfläche (25) ist, die tangential in einen Radius (54, 54', 154, 154', 154", 154''') übergeht,
der vorzugsweise tangential in den Hinterschnitt (46, 46', 146) ausmündet.

11. Lagerstück (20, 21, 120) nach einem der vorhergehenden Ansprüche, **dadurch**
**gekennzeichnet, dass**
der Körper (89, 189) des Lagerstücks (20, 21, 120) einen Einsetzbereich (79, 179) aufweist, der für ein hineingreifendes Einsetzen in eine Wand (26, 26') eines Schlagbocks (12) ausgeformt ist.

12. Lagerstück (20, 21, 120) nach Anspruch 11, **dadurch gekennzeichnet, dass**
das Lagerstück (20, 21, 120) einen Befestigungsbereich (78, 178),
wie mindestens eine Bohrung (92, 92') umfasst,
die sich durch den Körper des Lagerstücks (89, 189), vorzugsweise parallel zu mindestens einer der Anlagerflächen (65, 66, 165, 166, 167, 168), erstreckt,
und vorzugsweise einen Aufnahmeraum für einen Kopf (29, 29') einer versenkbaren Schraube (33) oder für eine versenkte Aufnahme einer versenkbaren Mutter (34') hat, der, insbesondere abhängig von einer wechselweisen Einbaulage (36, 36') des Lagerstücks (20, 21, 120), mindestens in zweierlei Richtungen (39, 39', 39", 139, 139', 139", 139''') eine Ortsfixierung des Lagerstücks (20, 21, 120) an wenigstens einem Wandabschnitt (27, 27', 76, 76') eines, das Lagerstück (20, 21, 120) aufzunehmenden Schlagbocks (12) erlaubt.

13. Lagerstück (20, 21, 120) nach einem der vorhergehenden Ansprüche, **dadurch**
**gekennzeichnet, dass**
eine zum Stirnbereich (80, 180) entferntest angeordnete Endfläche (75, 175) des Lagerstücks (20, 21, 120) einen tonnenförmigen Abschluss (75, 175) des Lagerstücks (20, 21, 120) bildet.

14. Lagerstück (20, 21, 120) nach einem der vorhergehenden Ansprüche, **dadurch**
**gekennzeichnet, dass**
das Lagerstück (20, 21, 120) vier Flächen (70, 71, 72, 73, 170, 171, 172, 173) aufweist, von denen sich jeweils zwei Flächen (70, 71, 72, 73, 170, 171, 172, 173) planparallel zueinander zwischen dem Stirnbereich (80, 180) und einem Ende (75, 175) des Lagerstücks (20, 21, 120) erstrecken, von denen wenigstens zwei Flächen (70, 72) in einer Einbaulage (36, 36') in einen Schlagbock (12) als Lagerflächen gegenüber dem Schlagbock (12) dienen und vorzugsweise eine Fläche (70, 71) zur Wandbegrenzung eines Durchschwingraums (94) des Schlagbocks (12) gestaltet ist.

## Claims

1. A bearing piece (20, 21, 120),
in particular as part of a pair of anvils (18, 18', 18", 18''') formed of identical parts,
having at least two contact surfaces (65, 66, 165, 166, 167, 168),
a first contact surface (65, 165) and a second contact surface (66, 166), and
having at least two bearing piece surfaces (70, 71, 72, 73, 170, 171, 172, 173),
a first bearing piece surface (70, 170) and a second bearing piece surface (71, 171), that is suitable for being installed as an anvil (18, 18', 18", 18''') of a pendulum impact tester (2),
wherein said bearing piece (20, 21, 120) is designed for positioning specimens (98) thereagainst, in particular a specimen (98) for impact testing according to Charpy, the bearing piece (20, 21, 120) comprising, to this end, said first, in particular plane, contact surface (65, 66, 165, 166, 167, 168), which is suitable for impact force absorption (10) of an impact force applied to a, in particular first, specimen (98),
**characterized in that**
the bearing piece (20, 21, 120) has at least two, preferably four, installation directions (39, 39', 139, 139', 139", 139''', 42, 42') to be interchanged by effecting an axial rotation (44, 144), in particular a rotation about a bearing piece longitudinal axis (64, 164), and **in that** the bearing piece (20, 21, 210) has at least said second, in particular plane, contact surface (66, 166), which, at least in some sections, is spaced apart from said first contact surface (65, 165),
which is suitable for impact force absorption (10) of an impact force applied to a, in particular second, specimen (98), and
**in that** the first contact surface (65, 165) and the first bearing piece surface (70, 170) confine an angle (69) of less than 90°, and
**in that** the second contact surface (66, 166) and the second bearing piece surface (71, 171) confine an angle (69') of less than 90°,
wherein a front area (80, 180) of a body (89, 189) of the bearing piece (20, 21, 120) having the first contact surface (65, 165) and the second contact surface (66, 166) is located between the first bearing piece surface (70, 170) and the second bearing piece surface (71, 171).

2. The bearing piece (20, 21, 120) according to claim 1, **characterized in that** the first contact surface (65, 165) and the second contact surface (66, 166) are arranged side by side in a plane-parallel manner on a front side (81, 181) of the bearing piece (20, 21, 120).

3. The bearing piece (20, 21, 120) according to claim 1 or claim 2, **characterized in that** said front area (80, 180) is designed to have a truncated wedge-like or a truncated pyramid-like shape,
wherein in particular the front side (81, 181) forms a wedge base (82) or a pyramid base (184).

4. The bearing piece (20, 21, 120) according to any one of the preceding claims,
**characterized in that**
the first contact surface (65, 165) merges into a first cylinder-segment-type bearing piece curvature (60, 160) and the second contact surface (66, 166) merges into a second cylinder-segment-type bearing piece curvature (61, 161), wherein the first bearing piece curvature (60, 160) and the second bearing piece curvature (61, 161) extend on different sides of the bearing piece (20, 21, 120) in such a manner as to be spaced apart from one another.

5. The bearing piece (20, 21, 120) according to any one of the preceding claims,
**characterized in that**
at least a third cylinder-segment-type bearing piece curvature (162) is provided preferably either extending in a parallel manner to another cylinder-segment-type bearing piece curvature (163), or being contiguous at an angle of 90° with another cylinder-segment-type bearing piece curvature (160, 161), wherein
in particular at least one of the contact surfaces (165, 166, 167, 168) is limited by at least one bearing piece curvature (160, 161, 162, 163) and one contact surface (165, 166, 167, 168), and two bearing piece curvatures (160, 161, 162, 163) comprise either the first (165) or the second contact surface (166).

6. The bearing piece (20, 21, 120) according to any one of the preceding claims,
**characterized in that**
a surface in the front area (80, 180) is laterally limited by at least two radii (54, 54', 154, 154', 154", 154'''), in particular by four radii (54, 54', 154, 154', 154", 154'''), and/or two chamfers (58, 58').

7. The bearing piece (20, 21, 120) according to any one of the preceding claims,
**characterized in that**
the first contact surface (65, 165) is limited by a first circular-cylindrical lateral segment surface (85, 185) and **in that** the second contact surface (66, 166) is limited by a second circular-cylindrical lateral segment surface (86, 186), wherein
preferably the first circular-cylindrical lateral segment surface (85, 185) and the second circular-cylindrical lateral segment surface (86, 186) are provided to be offset at least by 1 mm, preferably at least by 10 mm, from one another.

8. The bearing piece (20, 21, 120) according to any one of the preceding claims 2 to 7,
**characterized in that**
the front side (81, 181) has at least two segments (50, 50', 150, 150', 150", 150''') each having a surface size of a contact surface (65, 66, 165, 166, 167, 168), wherein
in particular at least four segments (50, 50', 150, 150', 150", 150''') constitute a front surface (22, 122).

9. The bearing piece (20, 21, 120) according to any one of the preceding claims 2 to 8,
**characterized in that**
a surface on the front side (81, 181) constitutes a widest surface of the anvil (18, 18', 18", 18''') that is undercut, wherein
through an undercut (46, 46', 146) of more than 10°, a surface size of the surface on the front side (81, 181) merges onto a bearing piece body cross-sectional area (90, 190) in particular provided to extend parallel to said surface, wherein said bearing piece body cross-sectional area (90, 190) is less than 80 % of the surface size of the surface on the front side (81, 181).

10. The bearing piece (20, 21, 120) according to any one of the preceding claims,
**characterized in that**
the contact surface (65, 66, 165, 166, 167, 168) is a striking surface (25) that tangentially merges into a radius (54, 54', 154, 154', 154", 154'''),
which preferably tangentially opens out into the undercut (46, 46', 146).

11. The bearing piece (20, 21, 120) according to any one of the preceding claims,
**characterized in that**
the body (89, 189) of the bearing piece (20, 21, 120) has an area of insertion (79, 179) that is designed for being inserted in an engaging manner into a wall (26, 26') of a bearing anvil (12).

12. The bearing piece (20, 21, 120) according to claim 11, **characterized in that**
the bearing piece (20, 21, 120) comprises an attachment area (78, 178),
such as at least one bore (92, 92'),
which extends through the body (89, 189) of the bearing piece, preferably in parallel to at least one of the contact surfaces (65, 66, 165, 166, 167, 168),
and preferably has a space for reception of a head (29, 29') of a retractable screw (33) or for retracted reception of a retractable nut (34') enabling the bearing piece (20, 21, 120), in particular depending on an alternating installation position (36, 36') of the bearing piece (20, 21, 120), to be locally fixed in at least two different directions (39, 39', 39", 139, 139', 139", 139''') to at least one wall portion (27, 27', 76, 76') of a bearing anvil (12) that is to receive the bearing piece (20, 21, 120).

13. The bearing piece (20, 21, 120) according to any one of the preceding claims,
**characterized in that**
an end surface (75, 175) of the bearing piece (20, 21, 120) arranged farthest away from the front area (80, 180) forms a barrel-shaped termination (75, 175) of the bearing piece (20, 21, 120).

14. The bearing piece (20, 21, 120) according to any one of the preceding claims,
**characterized in that**
the bearing piece (20, 21, 120) has four surfaces (70, 71, 72, 73, 170, 171, 172, 173), two surfaces of which (70, 71, 72, 73, 170, 171, 172, 173), respectively, extend between the front area (80, 180) and one end (75, 175) of the bearing piece (20, 21, 120) in such a manner as to be plane-parallel to one another, at least two surfaces of which (70, 72) serve as a bearing surface with respect to a bearing anvil (12) in a position of installation (36, 36') into the bearing anvil (12), and **in that** preferably one surface (70, 71) is designed for limiting a wall of a swing-through space (94) of the bearing anvil (12).

## Revendications

1. Pièce de palier (20, 21, 120), en particulier en tant que partie d'une paire de butées (18, 18', 18", 18''') formées de parties identiques, avec au moins deux surfaces d'appui (65, 66, 165, 166, 167, 168), une première surface d'appui (65, 165) et une seconde surface d'appui (66, 166), et avec au moins deux surfaces de pièce de palier (70, 71, 72, 73, 170, 171, 172, 173), une première surface de pièce de palier (70, 170) et une seconde surface de pièce de palier (71, 171), pièce de palier qui est appropriée pour le montage en tant que butée (18, 18', 18", 18''') d'un mouton-pendule (2), la pièce de palier (20, 21, 120) étant configurée que des éprouvettes (98) y soient déposées contre, en particulier d'une éprouvette (98) pour un essai de résilience selon Charpy, ce pour quoi la pièce de palier (20, 21, 120) a la première surface d'appui, en particulier plane (65, 66, 165, 166, 167, 168), qui est appropriée pour une absorption de force d'impact (10) d'une force d'impact appliquée à une éprouvette (98), en particulier à une première éprouvette (98),
**caractérisée en ce que**
la pièce de palier (20, 21, 120) présente au moins deux, de préférence quatre, sens de montage (39, 39', 139, 139', 139", 139''', 42, 42') entre lesquels il peut être alterné par une rotation d'axe (44, 144), en particulier par une rotation autour de l'axe longitudinal de la pièce de palier (64, 164), et que la pièce de palier (20, 21, 120) a au moins la seconde surface d'appui (66, 166), qui est en particulier plane, espacée au moins par endroits de la première surface d'appui (65, 165), seconde surface d'appui qui est appropriée pour une absorption de force d'impact (10) d'une force d'impact appliquée à une en particulier seconde éprouvette (98), et que la première surface d'appui (65, 165) et la première surface de pièce de palier (70, 170) incluent un angle (69) inférieur à 90° et que la seconde surface d'appui (66, 166) et la seconde surface de pièce de palier (71, 171) incluent un angle (69') inférieur à 90°, cependant qu'une zone frontale (80, 180) d'un corps (89, 189) de la pièce de palier (20, 21, 120) se trouve entre la première surface de pièce de palier (70, 170) et la seconde surface de pièce de palier (71, 171), zone frontale qui présente la première surface d'appui (65, 165) et la seconde surface d'appui (66, 166).

2. Pièce de palier (20, 21, 120) selon la revendication 1, **caractérisée en ce que** la première surface d'appui (65, 165) et la seconde surface d'appui (66, 166) sont placées en étant planes et parallèles l'une à côté de l'autre sur une face frontale (81, 181) de la pièce de palier (20, 21, 120).

3. Pièce de palier (20, 21, 120) selon la revendication 1 ou la revendication 2,
**caractérisée en ce que** la zone frontale (80, 180) est configurée en forme de clavette tronquée ou en forme de pyramide tronquée, cependant qu'en particulier la face frontale (81, 181) forme une base de clavette tronquée (82) ou une base de pyramide (184).

4. Pièce de palier (20, 21, 120) selon l'une des revendications précédentes, **caractérisée en ce que** la première surface d'appui (65, 165) se transforme en un premier arrondi de pièce de palier de type segment de cylindre (60, 160) et la seconde surface d'appui (66, 166) en un second arrondi de pièce de palier de type segment de cylindre (61, 161), cependant que le premier arrondi de pièce de palier (60, 160) et le second arrondi de pièce de palier (61, 161) s'étendent en étant espacés l'un de l'autre sur différents côtés de la pièce de palier (20, 21, 120).

5. Pièce de palier (20, 21, 120) selon l'une des revendications précédentes, **caractérisée en ce qu'**au moins un troisième arrondi de pièce de palier de type segment de cylindre (162) est prévu qui se rattache de préférence soit en étant parallèle à un autre arrondi de pièce de palier de type segment de cylindre (163), soit en formant un angle de 90° à un autre arrondi de pièce de palier de type segment de cylindre (160, 161), cependant qu'en particulier au moins l'une des surfaces d'appui (165, 166, 167, 168) est délimitée par au moins un arrondi de pièce de palier (160, 161, 162, 163) et une surface d'appui (165, 166, 167, 168) et que deux arrondis de pièce de palier (160, 161, 162, 163) comprennent soit la première surface d'appui (165), soit la seconde surface d'appui (166).

6. Pièce de palier (20, 21, 120) selon l'une des revendications précédentes, **caractérisée en ce qu'**une surface dans la zone frontale (80, 180) est délimitée latéralement par au moins deux rayons (54, 54', 154, 154', 154", 154'''), en particulier par quatre rayons (54, 54', 154, 154', 154", 154''') et/ou deux biseaux (58, 58').

7. Pièce de palier (20, 21, 120) selon l'une des revendications précédentes, **caractérisée en ce que** la première surface d'appui (65, 165) est délimitée par une première surface de segment d'enveloppe de cylindre (85, 185) et que la seconde surface d'appui (66, 166) est délimitée par une seconde surface de segment d'enveloppe de cylindre (86, 186), cependant que de préférence la première surface de segment d'enveloppe de cylindre (85, 185) et la seconde surface de segment d'enveloppe de cylindre (86, 186) sont décalées l'une de l'autre d'au moins 1 mm, de préférence d'au moins 10 mm.

8. Pièce de palier (20, 21, 120) selon l'une des revendications précédentes 2 à 7,
**caractérisée en ce que** la face frontale (81, 181) présente au moins deux segments (50, 50', 150, 150', 150", 150''') qui ont chacun une superficie d'une surface d'appui (65, 66, 165, 166, 167, 168), cependant qu'en particulier au moins quatre segments (50, 50', 150, 150', 150", 150''') forment une surface frontale (22, 122).

9. Pièce de palier (20, 21, 120) selon l'une des revendications précédentes 2 à 8,
**caractérisée en ce qu'**une surface sur la face frontale (81, 181) constitue une surface la plus large de la butée (18, 18', 18", 18''') qui a une contre-dépouille, cependant qu'une superficie de la surface sur la face frontale (81, 181) se poursuit par une contre-dépouille (46, 46', 146) de plus de 10° en une surface de section de corps de pièce de palier (90, 190) qui est en particulier parallèle à cette surface, cependant que la surface de section de corps de pièce de palier (90, 190) est de moins de 80% de la superficie de la surface sur la face frontale (81, 181).

10. Pièce de palier (20, 21, 120) selon l'une des revendications précédentes, **caractérisée en ce que** la surface d'appui (65, 66, 165, 166, 167, 168) est une surface de frappe (25) qui se transforme tangentiellement en un rayon (54, 54', 154, 154', 154", 154''') qui débouche de préférence tangentiellement dans la contre-dépouille (46, 46', 146).

11. Pièce de palier (20, 21, 120) selon l'une des revendications précédentes, **caractérisée en ce que** le corps (89, 189) de la pièce de palier (20, 21, 120) présente une zone de mise en place (79, 179) qui est formée pour une mise en place qui pénètre dans une paroi (26, 26') d'un porte-échantillon (12).

12. Pièce de palier (20, 21, 120) selon la revendication 11, **caractérisée en ce que** la pièce de palier (20, 21, 120) comprend une zone de fixation (78, 178) comme au moins une forure (92, 92') qui s'étend à travers le corps de la pièce de palier (89, 189), de préférence parallèlement à au moins l'une des surfaces d'appui (65, 66, 165, 166, 167, 168), et qui a de préférence un espace de logement pour une tête (29, 29') d'une vis escamotable (34') ou pour un logement renfoncé d'un écrou escamotable (34'), qui permet, en particulier en fonction d'une position de montage alternée (36, 36) de la pièce de palier (20, 21, 120) dans au moins deux sens (39, 39', 39", 139, 139', 139", 139'''), une fixation locale de la pièce de palier (20, 21, 120) sur au moins une portion de paroi (27, 27', 76, 76') d'un porte-échantillon (12) qui doit loger la pièce de palier (20, 21, 120).

13. Pièce de palier (20, 21, 120) selon l'une des revendications précédentes, **caractérisé en ce qu'**une surface terminale (75, 175) de la pièce de palier (20, 21, 120) placée la plus éloignée de la zone frontale (80, 180) forme une terminaison en forme de tonneau (75, 175) de la pièce de palier (20, 21, 120).

14. Pièce de palier (20, 21, 120) selon l'une des revendications précédentes, **caractérisée en ce que** la pièce de palier (20, 21, 120) présente quatre faces (70, 71, 72, 73, 170, 171, 172, 173) dont deux faces (70, 71, 72, 73, 170, 171, 172, 173) s'étendent respectivement de manière plane et parallèle l'une à l'autre entre la zone frontale (80, 180) et une extrémité (75, 175) de la pièce de palier (20, 21, 120), dont au moins deux faces (70, 72) servent, dans une position de montage (36, 36') dans un porte-échantillon (12), de surfaces d'appui par rapport au porte-échantillon (12) et que de préférence une face (70, 71) est configurée pour délimiter la paroi d'un espace de passage en basculement (94) du porte-échantillon (12).
